# EUROPÄISCHE PATENTSCHRIFT

(11) **EP 3 705 870 B1**
(45) Veröffentlichungstag und Bekanntmachung des Hinweises auf die Patenterteilung: **27.04.2022**
(21) Anmeldenummer: 19161274.6
(22) Anmeldetag: 07.03.2019
(51) Int. Cl.: G01N 1/36

(54) **VORRICHTUNG, VERWENDUNG UND VERFAHREN ZUR PRÄPARATION IN DER HISTOPATHOLOGIE**
DEVICE, USE AND METHOD FOR PREPARING IN HISTOPATHOLOGY
DISPOSITIF DE PRÉPARATION EN HISTOPATHOLOGIE, UTILISATION ET PROCÉDÉ

(43) Veröffentlichungstag der Anmeldung: 09.09.2020
(73) Patentinhaber: Siemens Healthcare GmbH, 91052 Erlangen (DE)
(72) Erfinder: Heismann, Björn, 91058 Erlangen (DE)

(56) Entgegenhaltungen:
- EP-A1- 2 278 295
- WO-A1-2018/232096
- US-A- 4 576 796
- US-A1- 2004 121 456
- US-A1- 2019 008 411

## Beschreibung

Die vorliegende Erfindung betrifft eine Vorrichtung zum automatischen Fixieren und/oder Einbetten einer Probe eines Patienten, sowie ein Verfahren zum Fixieren und/oder Einbetten einer Probe eines Patienten unter Verwendung der Vorrichtung.

Die histologische Befundung von Gewebe ist zentraler Bestandteil der klinischen Diagnostik. Sie wird weltweit in pathologischen Abteilungen oder Unternehmungen durchgeführt.

Die Netto-Befundungszeit beträgt typischerweise 4-10 Tage, je nach Nähe und Geschwindigkeit der Pathologie. Ein Hauptgrund für die erhebliche Zeitdauer sind viele manuelle Prozessschritte in der histologischen Aufarbeitung und den angrenzenden Prozessen. Insbesondere die vielen Schritte zur Probenpräparation sind manuell aufwändig und verlängern die Gesamtprozesszeit erheblich.

Bei der Resektion von mehreren Gewebeproben in einer OP ist zudem nach der Befundung die räumliche Zuordnung oft nicht mehr gegeben. Ein typisches Beispiel ist die Totalentfernung von Lymphknoten bei der Resektion eines Hals-Nacken-Tumors. Auch die Orientierung des Gewebes im Raum ist praktisch immer unbekannt.

Beide Probleme verzögern und erschweren die histologische Diagnostik in der medizinischen Praxis.

Der bisherige Prozess einer histologischen Untersuchung sieht üblicherweise folgende Schritte vor:
- Entnahme von Gewebe als histologische Probe z.B. durch eine Biopsie oder chirurgische Schnittentnahme
- Verpackung der Probe in ein Gefäß, z.B. Plastikröhrchen
- Versand an pathologische Abteilung oder externen Pathologie-Anbieter
- Diagnostik im histologischen Labor
- Dokumentation und Übermittlung des Ergebnisses an den beauftragenden Arzt

Die Untersuchung einer Probe in der Diagnostik erfolgt heutzutage gewöhnlich mikroskopisch, insbesondere lichtmikroskopisch. Hierfür sind normalerweise dünne, zumindest teilweise lichtdurchlässige Schnitte der Probe, z.B. einer Organprobe, erforderlich. Nur in wenigen Fällen lässt sich auf Schnitte verzichten, wie z.B. bei einem Blutausstrich, einem Schleimhautabstrich, einer Zellkultur, oder einem Quetschpräparat. Zudem ist es üblicherweise bei den meisten mikroskopischen Untersuchungen, insbesondere Hellfeldverfahren, erforderlich, die Probe zu färben, um entsprechende Strukturen in der Probe, z.B. einem Gewebe, sichtbar zu machen.

Für die Herstellung von dünnen Schnitten wird die Probe üblicherweise fixiert. Die gängige Methode hierzu ist die Paraffineinbettung nach Formaldehyd-Fixierung. Jedoch gibt es noch weitere Methoden der Fixierung und Einbettung, die beispielsweise je nach Probe, gewünschter Schnittdicke und dem erwünschten Ergebnis angewandt werden. Bei der Fixierung werden die Lebensvorgänge von Zellen und Geweben durch Denaturierung der darin enthaltenen Proteine gestoppt. Durch Wahl geeigneter Fällungsreagenzien können Strukturveränderungen durch Autolyse, Substanzverluste bei der weiteren Behandlung sowie postmortale Strukturverschiebungen verhindert werden.

Geeignete Reagenzien zur Fixierung sind beispielsweise verschiedene Aldehyde wie etwa Formaldehyd, Schwermetallverbindungen, organische Säuren wie Essigsäure oder Pikrinsäure, und Alkohole wie Methanol und/oder Ethanol. Sie denaturieren die Proteine durch chemische Bindungen oder Entfaltung von Aminosäureketten. Dadurch werden Strukturen stabilisiert und enzymatische Aktivitäten ausgeschaltet.

Für eine gute Fixierung und eine möglichst ursprüngliche, lebensnahe Erhaltung der Probe ist eine schnelle Durchtränkung davon von Vorteil. Hierzu überschreitet die Probe üblicherweise nicht eine Kantenlänge von 1 cm im Wesentlichen nicht. Für eine möglichst lebensnahe Fixierung kann daneben eine Perfusionsfixierung durchgeführt werden, bei der die Probe durch Spülung mit einer Fixierlösung, z.B. durch die Blutgefäße, fixiert wird, wobei im Anschluss die zum Fixieren verwendeten Chemikalien beispielsweise durch eine Wässerung ausgewaschen werden können.

Die Härtung des Gewebes durch die Fixierung reicht jedoch im Normalfall nicht für die Herstellung genügend dünner Schnitte aus. Da für eine mikroskopische Untersuchung jedoch im Wesentlichen durchstrahlbare Proben, z.B. dünne Schnitte, erforderlich sind, ist für die Herstellung solch dünner Schnitte eine Einbettung in schneidbare Substanzen notwendig. Hierzu wird üblicherweise Paraffin, für manche Zwecke auch Kunststoffe, verwendet. Das in den Geweben vorhandene Wasser wird dabei durch das Einbettungsmedium ersetzt. Da sich Wasser jedoch z.B. mit geschmolzenem Paraffin nicht mischt, erfolgt der Austausch jedoch über ein oder mehrere Zwischenmedien.

Es erfolgt zunächst eine makroskopische Begutachtung der Probe. Aus dieser werden dann relevante Areale ausgewählt und auf eine Größe zurechtgeschnitten, die gut verarbeitbar ist, z.B. 20×20×3 mm. Um aus dieser Probe zu entwässern, kann das Gewebe beispielsweise mit einem Alkohol in steigender Konzentration durchtränkt werden, was man auch als aufsteigende Alkoholreihe bezeichnet. Im Anschluss kann der Alkohol durch ein Intermedium ersetzt werden, dass sowohl mit dem Alkohol wie auch dem Paraffin mischbar ist. Hierzu wird üblicherweise Xylol verwendet.

Im Anschluss erfolgt die Einbettung, auch Infiltration genannt. Hierbei wird das Gewebe beispielsweise mit erwärmtem, verflüssigtem Paraffin durchtränkt. Hierdurch können zuvor mit Wasser gefüllte Bestandteile des Gewebes mit dem Paraffin als sogenanntes Einbettmedium ersetzt werden. Daraufhin werden kleine Paraffinblöcke hergestellt, welche die Probe beinhalten. Hierzu wird das vorher gewärmte Paraffin erstarren gelassen. Diesen Vorgang nennt man auch Ausgießen bzw. Einblocken. Im Block erhält die Probe die notwendige Festigkeit, um dünne Schnitte herstellen zu können.

Für andere Einbettmedien wie beispielsweise Kunststoffpolymere, Gelatine, Agar oder Nitrocellulose werden entsprechend andere Reagenzien zur Vor- und/oder Nachbehandlung verwendet. Je nach Einbettungsmedium ergeben sich hierbei verschiedene Vorteile. So können z.B. von in Kunststoff eingebettetem Gewebe für die Lichtmikroskopie Dünn- und Semidünnschnitte sowie für die Elektronenmikroskopie Ultradünnschnitten hergestellt werden.

Aus dem obigen ergibt sich jedoch, dass die Probenvorbereitung für die Herstellung von Schnitten zum einen arbeitsintensiv ist, zum anderen jedoch auch eine lange Zeit dauert. Eine automatische Maschine zum Einbetten einer Probe ist beispielsweise der EP 2 998 721 A1 zu entnehmen.

Diese ist jedoch technisch aufwändig und voluminös, sodass diese nur für spezielle Anbieter in Frage kommt und sich somit ein Zeitverlust beim Probenversand ergibt. Auch ist die entsprechende Maschine kostenintensiv und bedarf speziellen Bedienungspersonals. EP 2 278 295 A1 offenbart eine Vorrichtung mit derselben Funktionalität wie beansprucht, aber ohne Angabe der beanspruchten Dimensionen. Weitere Vorrichtungen sind in US 4 576 796 A, WO 2018/232096 A1 und US 2004/121456 A1 offenbart.

Es wurde gefunden, dass eine effiziente Fixierung und ggf. Einbettung erfolgen kann, die mit einer kleinen Volumenmenge an Reagenzien automatisch und ohne großen Aufwand erfolgt, indem die Fixierung auf kleinstem Raum durchgeführt wird. Die Fixierung kann hier schnell und kontrolliert mit geringem Substanzaufwand vollautomatisch erfolgen, wobei hier auch eine einfache Reinigung der Vorrichtung möglich ist. Darüber hinaus ist auch eine gute Steuerung der Mengen an Reagenzien möglich, und die Probe kann unter Vermeidung von zusätzlichem Zeitaufwand ortsungebunden fixiert und ggf. eingebettet werden. Zudem kann die Vorrichtung kostensparend hergestellt und betrieben werden. Darüber kann die Vorrichtung auch einfach vor Ort zur Verfügung gestellt werden, sodass eine Probe direkt nach der Entnahme fixiert werden kann, ohne dass es zu Veränderungen der Probe durch Alterung kommt. Insbesondere kann die Probe direkt nach einer Entnahme bereits von einem Operateur in die erfindungsgemäße Vorrichtung eingebracht werden und die Fixierung direkt beginnen.

In einem ersten Aspekt gemäß Anspruch 1 betrifft die vorliegende Erfindung eine Vorrichtung zum automatischen Fixieren und/oder Einbetten einer Probe eines Patienten, umfassend
- einen Probenbereich mit einem Probenraum, bei dem der Probenraum dazu ausgebildet ist, eine Probe aufzunehmen;
- einen Deckel, der mit dem Probenbereich verbunden ist und dazu ausgebildet ist, den Probenraum nach dem Einbringen der Probe zu verschließen;
- einen Substanzbereich, der mindestens ein erstes und ein zweites Kompartiment umfasst, wobei das erste Kompartiment dazu ausgebildet ist, mindestens eine erste Substanz aufzunehmen, und das zweite Kompartiment dazu ausgebildet ist, mindestens eine zweite Substanz aufzunehmen, wobei die mindestens eine erste Substanz und die mindestens eine zweite Substanz sich unterscheiden und zur Fixierung und/oder Einbettung der Probe des Patienten dienen;
- einen Fluidikbereich, der das mindestens eine erste Kompartiment mit dem Probenraum und das mindestens eine zweite Kompartiment mit dem Probenraum derart verbindet, dass die mindestens eine erste Substanz aus dem ersten Kompartiment über einen ersten Kanal und die mindestens eine zweite Substanz aus dem zweiten Kompartiment über einen zweiten Kanal in den Probenraum geleitet werden können, wobei der erste Kanal mindestens ein erstes Ventil und der zweite Kanal mindestens ein zweites Ventil umfassen;
- einen Sammelbereich mit einem Sammelkompartiment, bei dem das Sammelkompartiment dazu ausgebildet ist, mindestens eine erste ausgetauschte Substanz, mindestens eine zweite ausgetauschte Substanz, die mindestens eine erste Substanz und/oder die mindestens eine zweite Substanz zu sammeln, wobei das Sammelkompartiment mit dem Probenraum mit mindestens einem Sammelkanal verbunden ist, welche mindestens ein Sammelventil umfasst; und
- einen Steuerbereich mit mindestens einer Steuereinrichtung, die dazu ausgebildet ist, zumindest das mindestens eine erste Ventil, das mindestens eine zweite Ventil und das mindestens eine Sammelventil zu steuern;
wobei die Vorrichtung ein Gesamtvolumen aufweist, die maximal dem vierzigfachen Volumen des Probenraums entspricht, wobei der Probenraum ein Volumen von weniger als 200 cm³ aufweist.

Weiterhin ist die Verwendung der erfindungsgemäßen Vorrichtung zum Fixieren und/oder Einbetten einer Probe eines Patienten von der Erfindung umfasst, wie in Anspruch 8 offenbart.

Zudem offenbart ist ein Verfahren gemäß Anspruch 9 zum Fixieren und/oder Einbetten einer Probe eines Patienten unter Verwendung der erfindungsgemäßen Vorrichtung, umfassend:
- Bereitstellen der Probe des Patienten,
- Einbringen der Probe in den Probenraum der erfindungsgemäßen Vorrichtung,
- Schließen des Deckels,
- automatisches Einbringen einer mindestens einen ersten Substanz vom ersten Kompartiment in den Probenraum bis zu einer definierten ersten Menge der mindestens einen ersten Substanz durch Öffnen des mindestens einen ersten Ventils,
- automatisches Schließen des ersten Ventils nach Erreichen der definierten ersten Menge der mindestens einen ersten Substanz im Probenraum,
- Interagieren der Probe mit der mindestens einen ersten Substanz für einen definierten ersten Zeitraum,
- automatisches Austragen der mindestens einen ersten Substanz und/oder mindestens einer ersten ausgetauschten Substanz aus dem Probenraum in das Sammelkompartiment durch Öffnen des mindestens einen Sammelventils,
- automatisches Schließen des mindestens einen Sammelventils nach, bevorzugt im Wesentlichen vollständigen, Austragen der mindestens einen ersten Substanz und/oder der mindestens einen ersten ausgetauschten Substanz aus dem Probenraum,
- automatisches Einbringen einer mindestens einen zweiten Substanz vom zweiten Kompartiment in den Probenraum bis zu einer definierten zweiten Menge der mindestens einen zweiten Substanz durch Öffnen des mindestens einen zweiten Ventils,
- automatisches Schließen des zweiten Ventils nach Erreichen der definierten zweiten Menge der mindestens einen zweiten Substanz im Probenraum,
- Interagieren der Probe mit der mindestens einen zweiten Substanz für einen definierten zweiten Zeitraum,
- automatisches Austragen der mindestens einen zweiten Substanz und/oder mindestens einer zweiten ausgetauschten Substanz aus dem Probenraum in das Sammelkompartiment durch Öffnen des mindestens einen Sammelventils, und
- automatisches Schließen des mindestens einen Sammelventils nach, bevorzugt im Wesentlichen vollständigen, Austragen der mindestens einen zweiten Substanz und/oder der mindestens einen zweiten ausgetauschten Substanz aus dem Probenraum, wobei das automatische Öffnen und Schließen des mindestens einen ersten Ventils, des mindestens einen zweiten Ventils und des mindestens einen Sammelventils durch die mindestens eine Steuereinrichtung gesteuert wird, und wobei die mindestens eine erste Substanz und die mindestens eine zweite Substanz sich unterscheiden und zur Fixierung und/oder Einbettung der Probe des Patienten dienen.

Weitere Aspekte der vorliegenden Erfindung sind den abhängigen Ansprüchen und der detaillierten Beschreibung zu entnehmen.

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

Figuren 1 und 2 zeigen schematisch beispielhafte erfindungsgemäße Vorrichtungen.

In Figur 3 ist beispielhaft schematisch ein erfindungsgemäßes Verfahren gezeigt.

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Eine Probe im Sinne der vorliegenden Erfindung ist nicht besonders beschränkt, so sie von einem Patienten stammt. Insbesondere ist die Probe zumindest teilweise fest, und ist bevorzugt eine Gewebeprobe, welche beispielsweise bei einer Biopsie entnommen wurde.

Eine Fixierung bzw. ein Fixieren der Probe ist eine Konservierung von Strukturen in der (histologischen) Probe, z.B. durch entsprechende Kontaktierung und ggf. Reaktion mit einer entsprechenden Substanz zum Fixieren einer Probe, z.B. Aldehyd.

Eine Einbettung bzw. ein Einbetten der Probe bezeichnet ein Stabilisieren der Struktur der Probe durch Einbringen mindestens einer Substanz zum Einbetten der Probe, ggf. nach einer Dehydrierung der Probe oder einem Wasseraustausch in der Probe, wobei erfindungsgemäß das Dehydrieren oder der Wasseraustausch als Teilschritte der Einbettung verstanden werden. Beim Einbetten wird die Probe für ein folgendes Verfahren der Probenvorbereitung wie das Herstellen eines Schnitts ausreichend stabilisiert, z.B. durch Einbringen einer Substanz zum Stabilisieren wie etwa Paraffin.

Ein Patient ist erfindungsgemäß nicht besonders beschränkt, und es kann sich hierbei um einen Menschen oder ein Tier, bevorzugt ein Wirbeltier einschließlich eines Menschen und insbesondere bevorzugt um einen Menschen handeln.

Ein Ventil ist ein Bauteil zur Absperrung und/oder Steuerung des Durchflusses von Fluiden, insbesondere Flüssigkeiten. Es ist hier als fluidisches Schaltelement zu verstehen, mit dessen Hilfe Flüsse in der Vorrichtung gesteuert werden können unter Verwendung einer entsprechenden Steuereinrichtung. In einem ersten Aspekt betrifft die vorliegende Erfindung eine Vorrichtung gemäß Anspruch 1 zum automatischen Fixieren und/oder Einbetten einer Probe eines Patienten, umfassend
- einen Probenbereich mit einem Probenraum, bei dem der Probenraum dazu ausgebildet ist, eine Probe aufzunehmen;
- einen Deckel, der mit dem Probenbereich verbunden ist und dazu ausgebildet ist, den Probenraum nach dem Einbringen der Probe zu verschließen;
- einen Substanzbereich, der mindestens ein erstes und ein zweites Kompartiment umfasst, wobei das erste Kompartiment dazu ausgebildet ist, mindestens eine erste Substanz aufzunehmen, und das zweite Kompartiment dazu ausgebildet ist, mindestens eine zweite Substanz aufzunehmen, wobei die mindestens eine erste Substanz und die mindestens eine zweite Substanz sich unterscheiden und zur Fixierung und/oder Einbettung der Probe des Patienten dienen;
- einen Fluidikbereich, der das mindestens eine erste Kompartiment mit dem Probenraum und das mindestens eine zweite Kompartiment mit dem Probenraum derart verbindet, dass die mindestens eine erste Substanz aus dem ersten Kompartiment über einen ersten Kanal und die mindestens eine zweite Substanz aus dem zweiten Kompartiment über einen zweiten Kanal in den Probenraum geleitet werden können, wobei der erste Kanal mindestens ein erstes Ventil und der zweite Kanal mindestens ein zweites Ventil umfassen;
- einen Sammelbereich mit einem Sammelkompartiment, bei dem das Sammelkompartiment dazu ausgebildet ist, mindestens eine erste ausgetauschte Substanz, mindestens eine zweite ausgetauschte Substanz, die mindesten eine erste Substanz und/oder die mindestens eine zweite Substanz zu sammeln, wobei das Sammelkompartiment mit dem Probenraum mit mindestens einem Sammelkanal verbunden ist, welche mindestens ein Sammelventil umfasst; und
- einen Steuerbereich mit mindestens einer Steuereinrichtung, die dazu ausgebildet ist, zumindest das mindestens eine erste Ventil, das mindestens eine zweite Ventil und das mindestens eine Sammelventil zu steuern;
wobei die Vorrichtung ein Gesamtvolumen aufweist, die maximal dem vierzigfachen Volumen des Probenraums entspricht, wobei der Probenraum ein Volumen von weniger als 200 cm³ aufweist.

Insbesondere weist die erfindungsgemäße Vorrichtung im Vergleich zum Stand der Technik einen sehr geringen Platzbedarf auf, wobei hier die Miniaturisierung nicht trivial ist. Zudem ergeben sich durch die Miniaturisierung nicht vorhersehbare Synergien für die Probenfixierung und ggf. Einbettung, wie auch für die Nachbehandlung, etwa bei einem Wiederverwenden und/oder Reinigen, sowie eine gewaltige Kosten- und Zeitersparnis.

Die erfindungsgemäße Vorrichtung kann zum Fixieren und/oder Einbetten einer Probe dienen, also nur zu einer Fixierung, zu einer Fixierung und anschließenden Einbettung, und auch nur zu einer Einbettung, beispielsweise wenn die Probe zuvor fixiert wurde. Durch das Vorhandensein der mindestens zwei Kompartimente ist es bevorzugt, dass zumindest Teilschritte einer Einbettung einer Probe in der erfindungsgemäßen Vorrichtung vorgenommen werden können oder sogar eine Einbettung der Probe vorgenommen werden kann, auch wenn es nicht ausgeschlossen ist, dass in der erfindungsgemäßen Vorrichtung und dem erfindungsgemäßen Verfahren nur Fixierungsschritte durchgeführt werden. Entsprechend ist die vorliegende Erfindung auch auf eine Vorrichtung zum automatischen Fixieren und Einbetten einer Probe eines Patienten, die Verwendung der Vorrichtung zum Fixieren und Einbetten einer Probe eines Patienten, sowie ein Verfahren zum Fixieren und Einbetten einer Probe eines Patienten unter Verwendung der erfindungsgemäßen Vorrichtung gerichtet, aber auch auf eine Vorrichtung und ein Verfahren zum Einbetten einer (bereits fixierten) Probe, sowie entsprechende Verwendungen.

In der erfindungsgemäßen Vorrichtung ist der Probenbereich mit einem Probenraum, bei dem der Probenraum dazu ausgebildet ist, eine Probe aufzunehmen, nicht besonders beschränkt, sofern er die (ggf. bereits fixierte) Probe aufnehmen kann, also einen Probenraum umfasst, in den die Probe eingebracht werden kann. Bevorzugt wird die Probe im Probenbereich innerhalb des Probenraums mit einer Befestigungseinheit befestigt. Der Probenbereich kann eine Öffnung umfassen, in die die Probe eingebracht werden kann, und welche mit dem Deckel verschließbar ist. Natürlich kann der Probenraum insgesamt auch mit einem beliebigen Deckel verschlossen werden, der Probenbereich muss also in diesem Sinne keine definierte Öffnung aufweisen, sofern die Probe eingebracht werden kann, z.B. kann er nach zwei Seiten offen sein, wobei beide Seiten mit dem Deckel oder auch mehreren (Teil)Deckeln verschlossen werden können.

Es ist bevorzugt, dass der Probenraum keinen Zugang außer der Öffnung zum Einbringen und Herausnehmen der Probe und über einen oder mehrere Kanäle, welche den Probenraum mit den Kompartimenten über den Fluidikbereich verbinden, aufweist, sowie ggf. einen Kanal oder mehrere Kanäle zum Ent- und Belüften des Probenraums, wenn dieser mit einer Substanz befüllt wird oder diese. Gemäß bestimmten Ausführungsformen weist eine erfindungsgemäße Vorrichtung mindestens einen Kanal zum Be- und/oder Entlüften des Probenraums auf, der dazu ausgebildet ist, den Probenraum zu be- oder entlüften, also die Atmosphäre, z.B. Luft, daraus zu entfernen oder wieder zuzufügen, beispielsweise wenn eine Substanz ausgebracht wird. Der mindestens eine Kanal zum Be- und/oder Entlüften kann hierbei auch mit mindestens einem Kompartiment, z.B. dem ersten Kompartiment und/oder dem zweiten Kompartiment und/oder dem Sammelkompartiment und/oder weiteren Kompartimenten verbunden sein, beispielsweise über entsprechende Kanäle, sodass ein Austausch der Atmosphäre, z.B. Luft, im Probenraum mit der ersten und/oder zweiten Substanz, etc. erfolgen, kann, und kein Austausch nach außerhalb der Vorrichtung hin stattfinde, also innerhalb der Vorrichtung ein geschlossener Fluidkreislauf bzw. geschlossene Fluidkreisläufe mit der Atmosphäre, z.B. Luft, des Probenraums.

Gemäß bestimmten Ausführungsformen weist eine erfindungsgemäße Vorrichtung eine zweite Pumpe und/oder ein Ventil zum Be- und/oder Entlüften auf, die sich im bzw. in Verbindung mit dem mindestens einen Kanal zum Be- und/oder Entlüften des Probenraums befinden und die dazu ausgebildet sind, den Probenraum über den mindestens einen Kanal zum Be- und/oder Entlüften des Probenraums zu be- oder entlüften, insbesondere wenn aus dem Probenraum eine Substanz, z.B. die mindestens eine erste und/oder mindestens eine zweite Substanz, ausgetragen oder eine Substanz in den Probenraum eingebracht wird.

Gemäß bestimmten Ausführungsformen ist der Probenraum bevorzugt nur mit einem Kanal, der als gemeinsamer Kanal ausgebildet ist, und optional einem Kanal zum Entfernen von Substanzen, sofern dies nicht über den gemeinsamen Kanal erfolgt, und/oder einem Kanal zum Be- und/oder Entlüften des Probenraums verbunden. Hierdurch lässt sich die Menge der jeweiligen Substanz im Probenraum gut einstellen. Zudem wird hierdurch eine ggf. durchgeführte Reinigung des Probenraums vereinfacht.

Gemäß bestimmten Ausführungsformen führt nur ein für die Substanzen verwendeter gemeinsamer Kanal zum Probenraum, und dieser gemeinsame Kanal ist bevorzugt derart angeordnet, dass eine Substanz, die aus diesem strömt, nicht direkt auf die Probe gerichtet ist, um eine Beschädigung der Probe zu vermeiden. Natürlich kann dies auch über die Regelung eines Flusses der jeweiligen Substanz sichergestellt werden. Es ist jedoch nicht ausgeschlossen, dass der Probenraum auch mit einem Sammelkanal verbunden ist, sodass beim Einbringen einer neu einzubringenden Substanz, z.B. der erste Substanz, die Atmosphäre, z.B. Luft, und/oder eine im Probenbereich vorhandene Substanz, z.B. ein durch die erste Substanz ausgetauschtes Wasser der Probe, durch die zweite Substanz ersetzt wird, sodass hier auch zum Befüllen eine Art Durchfluss vorhanden ist. In solchen Ausführungsformen ist auch nicht unbedingt ein Kanal zum Be- und/oder Entlüften des Probenraums erforderlich.

Der Probenraum ist hinsichtlich der Größe nicht besonders beschränkt, insofern er die Probe aufnehmen kann und ein Volumen von weniger als 200 cm³ aufweist. Hierbei ist der Probenraum hinsichtlich der Ausgestaltung nicht besonders beschränkt, und kann beispielsweise quadratisch, quaderförmig, kugelförmig, zylinderförmig, etc. sein, aber auch unförmig. Bevorzugt ist jedoch mindestens eine Seite des Probenraums derart ausgestaltet, dass zumindest auf einer Seite die Probe aufgebracht, bevorzugt befestigt, werden kann. Gemäß bestimmten Ausführungsformen weist der Probenraum ein Volumen von 150 cm³ oder weniger, bevorzugt von 100 cm³ oder weniger, weiter bevorzugt von 70 cm³ oder weniger, noch weiter bevorzugt von 40 cm³ oder weniger, noch weiter bevorzugt 30 cm³ oder weniger, insbesondere von 20 cm³ oder weniger, z.B. von 10 cm³ oder weniger oder 8, 5, 3, 2, oder sogar 1 cm³ oder weniger auf. Hierbei ist ein kleiner Probenraum bevorzugt, um die Menge an Substanzen zum Fixieren und ggf. Einbetten gering zu halten.

Durch die Größe des Probenraums definiert sich erfindungsgemäß die Größe der Vorrichtung selbst, da diese entsprechend auch Raum für zwei oder mehrere Kompartimente im Substanzbereich aufweist, wobei die Substanzen geeignet im erfindungsgemäßen Verfahren den Probenraum für eine Interaktion befüllen, um mit der Probe interagieren zu können. Die Interaktion kann hierbei beispielsweise einen Fluidaustausch umfassen, aber auch ggf. eine Reaktion.

Auch weist die Vorrichtung einen Fluidikbereich und ein Sammelkompartiment und einen Steuerbereich auf, welche entsprechend noch Platz in der Vorrichtung benötigen. Da die jeweiligen Substanzen mit einer jeweils definierten Menge in den Probenraum eingebracht werden, umfassen die jeweiligen Kompartimente zumindest ein Volumen, um diese entsprechende Menge zu fassen. Auch ist das Sammelkompartiment zum Sammeln der jeweiligen Substanzen entsprechend auszulegen. Entsprechend ergibt sich je nach Zahl der Kompartimente für Substanzen zum Fixieren und/oder Einbetten der Probe eine entsprechende Größe der Vorrichtung. So eine Vorrichtung mehr als zwei Kompartimente aufweist, vergrößert sich die Vorrichtung zumindest um das jeweilige Kompartiment und um einen entsprechenden Mehrraum im Sammelkompartiment.

Die Vorrichtung weist erfindungsgemäß ein Gesamtvolumen auf, das maximal dem vierzigfachen, bevorzugt maximal dem dreißigfachen, weiter bevorzugt maximal dem 25-fachen, besonders bevorzugt maximal dem zwanzigfachen, beispielsweise maximal dem 15-fachen, maximal dem 12-fachen, maximal dem 11-fachen, maximal dem zehnfachen, maximal dem neunfachen oder maximal dem achtfachen Volumen des Probenraums entspricht, wobei der Probenraum ein Volumen von weniger als 200 cm³ aufweist. Hierbei ergibt sich beispielsweise bei Ausführung der Vorrichtung als Quader z.B. eine Größe von weniger als 40 cm × 20 cm × 10 cm. Es ist jedoch bevorzugt, dass eine erfindungsgemäße Vorrichtung eine Größe von weniger als 2000 cm³, bevorzugt von weniger als 1000 cm³, insbesondere von weniger als 400 cm³ oder sogar von weniger als 200 cm³, z.B. auch 150 cm³ oder weniger oder 100 cm³ oder weniger, auf.

Das Material des Probenbereichs ist nicht besonders beschränkt. Bevorzugt umfasst das Material des Probenbereichs, das den Probenraum umgibt, zumindest in einem Bereich, der mit einer der mindestens einen ersten Substanz und der mindestens einen zweiten Substanz und/oder den mindestens einen ersten und/oder zweiten ausgetauschten Substanzen sowie ggf. weiteren Substanzen in Kontakt kommt, ein Material, dass nicht durch diese Substanzen angegriffen wird. Hierzu kann das Material des Probenbereichs in diesem Bereich ggf. auch beschichtet sein. Gemäß bestimmten Ausführungsformen ist das Material des Probenbereichs aus demselben Material gebildet wie der Substanzbereich und/oder der Fluidikbereich und/oder der Sammelbereich, welche alle mit den jeweiligen Substanzen in Berührung kommen können, wobei sich die Materialien aber auch unterscheiden können. Bevorzugt ist die Verwendung eines Materials, welches bruchfest ist, wobei dies jedoch nicht zwangsläufig erforderlich ist. Geeignete Materialien für die Bereiche umfassen beispielsweise Polymere, Keramiken und/oder Metalle und/oder Legierungen davon, z.B. intransparente Kunststoffe. Es sind jedoch auch transparente Ausführungen möglich, beispielsweise wenn eine Umverpackung vorhanden ist.

Der Deckel, der mit dem Probenbereich verbunden ist und dazu ausgebildet ist, den Probenraum nach dem Einbringen der Probe zu verschließen, ist nicht besonders beschränkt, sofern er den Probenraum verschließen kann. Gemäß bestimmten Ausführungsformen ist er zumindest in Teilen, die mit der Probe und/oder der mindestens einen ersten Substanz und/oder der mindestens einen zweiten Substanz und/oder der mindestens einen ersten und/oder zweiten ausgetauschten Substanz und/oder weiteren Substanzen in Kontakt kommt, aus demselben Material wie der Probenbereich. Bevorzugt ist der Deckel dünn ausgebildet, beispielsweise mit einer Dicke von weniger als 1 cm, bevorzugt von weniger als 5 mm.

Auch der Substanzbereich, der mindestens ein erstes und ein zweites Kompartiment umfasst, ist nicht besonders beschränkt, und kann aus demselben Material wie der Probenbereich gebildet sein, oder einem verschiedenen.

Der Substanzbereich weist mindestens ein erstes und ein zweites Kompartiment auf, kann jedoch auch mehr als zwei Kompartimente umfassen, beispielsweise drei, vier, fünf, sechs, sieben, acht, neun, zehn oder mehr, wobei die Anzahl auf die Anzahl an Substanzen zur Fixierung und/oder Einbettung einer Probe abgestimmt sein kann. Die jeweiligen Kompartimente sind dann entsprechend dazu ausgebildet, eine erste, zweite, dritte, vierte, fünfte, sechste, siebte, achte, neunte, zehnte oder weitere Substanz aufzunehmen, die sich alle unterscheiden können und/oder auch zumindest in Teilen gleichen können, bevorzugt jedoch verschieden sind.

Die Substanzen sind hierbei bevorzugt Flüssigkeiten oder Lösungen, mit welchen die Probe fixiert und/oder eingebettet werden kann, wobei die Flüssigkeiten oder Lösungen hier an eine gewählte Fixierungs- und/oder Einbettmethode angepasst sein können und nicht besonders beschränkt sind. Beispielsweise kann eine Fixierung mit Formaldehyd erfolgen, und eine Einbettung dann mit einer Alkoholreihe, Xylol und abschließend flüssigem Paraffin. Da die erste und zweite Substanz sich unterscheiden, sind somit auch verschiedene Anforderungen an die Materialbeständigkeit der Kompartimente oder sogar des Substanzbereichs gegeben.

Auch der Fluidikbereich, der das erste Kompartiment und das zweite Kompartiment und ggf. weitere Kompartimente mit dem Probenraum derart verbindet, dass die mindestens eine erste Substanz aus dem ersten Kompartiment über einen ersten Kanal und die mindestens eine zweite Substanz aus dem zweiten Kompartiment über einen zweiten Kanal und weitere Substanzen über entsprechende weitere Kanäle in den Probenraum geleitet werden können, ist nicht besonders beschränkt, wobei der erste Kanal mindestens ein erstes Ventil, der zweite Kanal mindestens ein zweites Ventil, und ggf. weitere optionale Kanäle wie ein dritter, vierter, fünfter, sechster, siebter, achter, neunter, zehnter, etc. Kanal entsprechend ein drittes, viertes, fünftes, sechstes, siebtes, achtes, neuntes, zehntes, etc. Ventil umfassen. Jeder Kanal umfasst hierbei mindestens ein Ventil, wobei auch mehrere Ventile vorgesehen sein können. Auch ist es nicht ausgeschlossen, dass ein jeweiliges Kompartiment mehrere Kanäle mit je einem Ventil aufweist, dies ist jedoch nicht bevorzugt. Die Kanäle im Fluidikbereich sind nicht besonders beschränkt und können für den Fluss von und/oder zu verschiedenen Kompartimenten gleich oder verschieden hinsichtlich Form und/oder Dimensionierung aufgebaut sein, beispielsweise als Kanäle mit rundem, halbrunden, ovalen, halbovalen, im Wesentlichen rechteckigen, im Wesentlichen quadratischen und/oder anderen Querschnitt in Fließrichtung einer Substanz, wobei die Kanäle hier für einen entsprechenden Fluss auch in der Form optimiert werden können. Die Kanäle können verschiedene Formen wie Geraden, Kurven etc. umfassen, sofern sie die Anbindung zwischen dem jeweiligen Kompartiment und dem Probenraum gewährleisten.

Der Sammelbereich mit dem Sammelkompartiment, bei dem das Sammelkompartiment dazu ausgebildet ist, mindestens eine erste ausgetauschte Substanz, mindestens eine zweite ausgetauschte Substanz, die mindesten eine erste Substanz und/oder die mindestens eine zweite Substanz zu sammeln, wobei das Sammelkompartiment mit dem Probenraum mit mindestens einem Sammelkanal verbunden ist, welche mindestens ein Sammelventil umfasst, ist nicht besonders beschränkt, wie auch nicht der Sammelkanal und das Sammelventil.

Es ist auch nicht ausgeschlossen, dass der Sammelbereich zumindest teilweise in den Substanzbereich und/oder den Fluidikbereich integriert ist, und die Anordnung kann entsprechend einer geeigneten Fluidsteuerung geeignet aufgebaut sein. Das Sammelkompartiment ist dazu ausgelegt, Substanzen, die sich im Probenraum befanden, aufzunehmen, sodass bei mehrmaligem Einbringen von Substanzen, z.B. einer ersten und zweiten Substanz, entsprechend das Sammelkompartiment größer auszulegen ist. Um ein Befüllen des Sammelkompartiments zu ermöglichen kann dieses auch über einen Kanal zum Entlüften des Sammelkompartiments verfügen, über den eine darin vorhandene Atmosphäre, z.B. Luft, entsprechend der Zufuhr an Substanz entfernt werden kann. Zur Abgabe der Atmosphäre kann der Kanal zum Entlüften des Sammelkompartiments beispielsweise geeignet mit den weiteren Bestandteilen der Vorrichtung verbunden sein, z.B. mit dem Probenraum, wohin entsprechend dann die Atmosphäre wieder abgegeben werden kann. Entsprechend kann der Kanal zum Entlüften des Sammelkompartiments beispielsweise auch mit dem Kanal zum Be- und/oder Entlüften des Probenraums verbunden sein, um entsprechend wiederum eine Art geschlossener Kreislauf zu bilden.

In der erfindungsgemäßen Vorrichtung ist zudem der Steuerbereich mit mindestens einer Steuereinrichtung, die dazu ausgebildet ist, zumindest das mindestens eine erste Ventil, das mindestens eine zweite Ventil und das mindestens eine Sammelventil zu steuern, nicht besonders beschränkt. Die Steuereinrichtung ist ebenfalls nicht besonders beschränkt und kann beispielsweise eine Mikro-Controller oder entsprechende andere Recheneinheiten umfassen. Die Steuereinrichtung kann vollautomatisch ausgelegt sein, wobei es jedoch nicht ausgeschlossen ist, dass sie von außen über ein Bedienfeld teilweise programmierbar ist, um z.B. abhängig von einer Probengröße verschiedene Mengen an zugeführten Substanzen und/oder Zeiträume zum Interagieren der Probe mit verschiedenen Substanzen eingeben zu können. Gemäß bestimmten Ausführungsformen umfasst die erfindungsgemäße Vorrichtung ein Bedienfeld, mit dem Eingaben in die Steuereinrichtung eingegeben werden können, das also dazu ausgebildet ist, Eingaben einzugeben, mit denen die Steuereinrichtung bezüglich bestimmter Parameter programmiert werden kann.

Gemäß bestimmten Ausführungsformen ist die Steuereinrichtung vollautomatisch ausgeführt und ist dazu ausgebildet, nach Schließen des Deckels ein erfindungsgemäßes Verfahren durchzuführen.

Die erfindungsgemäße Vorrichtung umfasst mindestens einen Probenbereich, einen Deckel, einen Substanzbereich, einen Fluidikbereich, einen Sammelbereich und einen Steuerbereich, wobei einzelne Bereiche modular aufgebaut sein können. So können beispielsweise der Substanzbereich, Teile des Fluidikbereichs, beispielsweise umfassend die Kanäle von ersten und zweiten Kompartiment zu einem gemeinsamen Kanal und ggf. Teile des gemeinsamen Kanals, und der Steuerbereich in einem ersten Modul zusammengefasst sein, welches ohne weitere Desinfektion wiederverwertbar ist, wohingegen die weiteren Bestandteile die mit Teilen der Probe in Berührung kommen oder Substanzen in Berührung kommen, die mit der Probe in Berührung gekommen sind, in ein zweites Modul zusammengefasst sein können, welches bevorzugt desinfiziert wird oder entsorgt werden kann. Hierzu kann zwischen und/oder in den beiden Modulen entsprechend auch - bevorzugt zumindest im zweiten Modul, Ventile vorhanden sein, welche verhindern, dass Substanzen, die mit der Probe in Berührung gekommen sind, in das erste Modul gelangen. Die beiden Module können beispielweise geeignet miteinander verbunden werden, beispielsweise über Stecker, Passformen, Verbindungselemente, etc. Es ist hierbei nicht ausgeschlossen, dass in solchen Ausführungsformen auch das erste Modul desinfiziert wird.

Gemäß bestimmten Ausführungsformen weist die erfindungsgemäße Vorrichtung im Probenbereich eine Befestigungseinheit auf, die dazu ausgebildet ist, die Probe im Probenraum in einer bestimmten Ausrichtung zu befestigen.

Die Befestigungseinheit ist erfindungsgemäß nicht besonders beschränkt und kann beispielsweise eine haftende Oberfläche, eine Haltevorrichtung, etc. im Probenraum umfassen.

Gemäß bestimmten Ausführungsformen weist die erfindungsgemäße Vorrichtung mindestens ein Gyroskop auf, dass dazu ausgebildet ist, die Probe in der Vorrichtung derart auszurichten, dass die Probe beim Einbringen und beim Ausbringen aus der Vorrichtung dieselbe Ausrichtung aufweist, wobei die Vorrichtung im Probenbereich eine Befestigungseinheit aufweist, die dazu ausgebildet ist, die Probe im Probenraum in einer bestimmten Ausrichtung zu befestigen.

Das Gyroskop ist nicht besonders beschränkt und kann geeignet um die Vorrichtung oder Bestandteile davon angebracht sein. Das Gyroskop kann auch nur temporär vorgesehen sein, etwa um eine räumliche Orientierung der Probe im Probenraum, welche beispielweise der Lage im Körper möglichst exakt entspricht, bevorzugt im Wesentlichen entspricht, zu bestimmten und diese digital zur weiteren Verarbeitung speichern oder an einen externen Datenempfänger übertragen. Gemäß bestimmten Ausführungsformen wird entsprechend im erfindungsgemäßen Verfahren die Probe in den Probenraum derart eingebracht, dass die räumliche Orientierung beim Einbringen der Lage im Körper möglichst exakt entspricht, bevorzugt im Wesentlichen entspricht. Die räumliche Lage der Probe kann hierzu auch beispielsweise über einen Knopf, ein Bedienfeld etc. der erfindungsgemäßen Vorrichtung der Steuereinrichtung angezeigt werden, welche diese dann speichern kann. Gemäß bestimmten Ausführungsformen umfasst die erfindungsgemäße Vorrichtung einen Knopf und/oder ein Bedienfeld und/oder ein Feld auf einem Bedienfeld, der bzw. das dazu ausgebildet ist, bei einem Betätigen der Steuereinrichtung eine räumliche Lage der Probe im Probenraum anzuzeigen und dies ggf. zu speichern und/oder zu übertragen, z.B. an einen externen Datenempfänger.

Gemäß bestimmten Ausführungsformen sind der erste Kanal, der zweite Kanal, ggf. weitere Kanäle und/oder der Sammelkanal zumindest teilweise in einem gemeinsamen Kanal zusammengefasst. Bevorzugt sind der erste Kanal, der zweite Kanal, ggf. weitere Kanäle, der Sammelkanal und/oder der gemeinsame Kanal ein Kanal mit einer durchschnittlichen Öffnung bzw. einem Querschnitt mit einer maximalen Weite von weniger als 1 cm, bevorzugt weniger als 5 mm, weiter bevorzugt weniger als 2 mm, noch weiter bevorzugt ein Mikrokanal mit einer maximalen Weite im Querschnitt von weniger als 1 mm, beispielsweise weniger als 800 µm oder weniger als 700 µm oder weniger als 600 µm oder weniger als 500 µm oder weniger als 400 µm oder weniger als 300 µm oder weniger als 200 µm oder weniger als 100 µm. Durch die entsprechende Dimensionierung ist eine einfachere Steuerung des Flusses sowie einer Zugabemenge einer Substanz möglich. Durch die Zusammenführung in einen gemeinsamen Kanal kann zudem die Vorrichtung kleiner gestaltet werden und der Fluss besser kontrolliert werden wie auch ein Pumpen des Flusses einer jeweiligen Substanz einfacher gesteuert werden. Die maximale Weite kann hierbei entsprechend der Kanalform geeignet bestimmt werden, z.B. bei runden Kanälen als Durchmesser, bei rechteckigen oder quadratischen Kanälen als Diagonale, bei halbrunden Kanälen als Radius, etc.

Gemäß bestimmten Ausführungsformen weist die erfindungsgemäße Vorrichtung mindestens eine erste Pumpe auf, die nicht besonders beschränkt ist, insbesondere mindestens eine erste Mikrofluidikpumpe, die nicht besonders beschränkt ist. Die mindestens eine erste Pumpe ist dazu ausgebildet, die mindestens eine erste Substanz aus dem ersten Kompartiment über den ersten Kanal und/oder die mindestens eine zweite Substanz aus dem zweiten Kompartiment über den zweiten Kanal in den Probenraum zu pumpen und/oder die mindestens eine erste ausgetauschte Substanz, die mindestens eine zweite ausgetauschte Substanz, die mindestens eine erste Substanz und/oder die mindestens eine zweite Substanz aus dem Probenraum über den Sammelkanal in das Sammelkompartiment zu pumpen, wobei bevorzugt die mindestens eine erste Pumpe über die mindestens eine Steuereinrichtung gesteuert wird. Die Steuerung der ersten Pumpe über die mindestens eine Steuereinrichtung und/oder auch einer zweiten Pumpe, etc. ist nicht besonders beschränkt, läuft bevorzugt automatisch ab, um ein erfindungsgemäßes Verfahren durchzuführen.

Gemäß bestimmten Ausführungsformen ist die mindestens eine erste Pumpe in einem Bereich des gemeinsamen Kanals vorgesehen. Hierdurch können alle Kanäle durch eine Pumpe gepumpt werden und ein Druckabfall über die Kanäle ist leichter steuerbar.

Gemäß bestimmten Ausführungsformen ist die mindestens eine Steuereinrichtung dazu ausgebildet, zumindest das erste Ventil zu öffnen, wenn der Deckel den Probenbereich verschließt. Entsprechend kann das erfindungsgemäße Verfahren nach Schließen des Deckels sofort starten und eine weitere Alterung der Probe weiter verhindert werden. Hierzu kann der Probenbereich und/oder der Steuerbereich beispielsweise einen Schließmechanismus mit einem Schließsensor aufweisen, der dazu ausgebildet ist, das Schließen des Deckels zu registrieren.

Gemäß bestimmten Ausführungsformen umfasst die erfindungsgemäße Vorrichtung weiter mindestens einen Sensor im Probenbereich, der mit der mindestens einen Steuereinrichtung verbunden ist und der dazu ausgebildet ist, eine Füllmenge im Probenraum mit der mindestens einen ersten Substanz und/oder mindestens einen zweiten Substanz anzuzeigen, wobei die mindestens eine Steuereinrichtung entsprechend der Füllmenge das erste Ventil, das zweite Ventil und/oder das Sammelventil steuert. Der mindestens eine Sensor ist nicht besonders beschränkt und kann ein Füllstandssensor, ein Drucksensor, etc. sein. Auch ist es nicht ausgeschlossen, dass weitere Sensoren vorhanden sind, beispielsweise im ersten und/oder zweiten Kompartiment und/oder dem Sammelkompartiment und/oder weiteren Kompartimenten, welche mit der mindestens einen Steuereinrichtung verbunden sind. Hierdurch ist eine bessere Steuerung der Substanzmengen möglich.

Auch kann in einer erfindungsgemäßen Vorrichtung mindestens ein Heizelement vorgesehen sein, welches beispielsweise dazu ausgebildet ist, eine Substanz in einem Kompartiment zu erwärmen, beispielsweise Paraffin für eine Einbettung der Probe, und/oder die Viskosität einer Substanz in einem Kompartiment geeignet einzustellen. Auch das mindestens eine Heizelement kann über die mindestens eine Steuereinrichtung gesteuert werden, beispielsweise hinsichtlich eines Erwärmungszeitpunktes, wenn z.B. die Einbettung erst nach Fixierung und Lösungsmittelaustausch erfolgt. Gemäß bestimmten Ausführungsformen befindet sich das mindestens eine Heizelement entfernt vom Probenraum, um eine Beeinflussung der Probe durch Hitze möglichst zu vermeiden. Es ist jedoch nicht ausgeschlossen, dass auch der Probenbereich mit dem mindestens einen Heizelement geheizt werden kann, beispielsweise um einen Austausch mit flüssigem Paraffin zu ermöglichen.

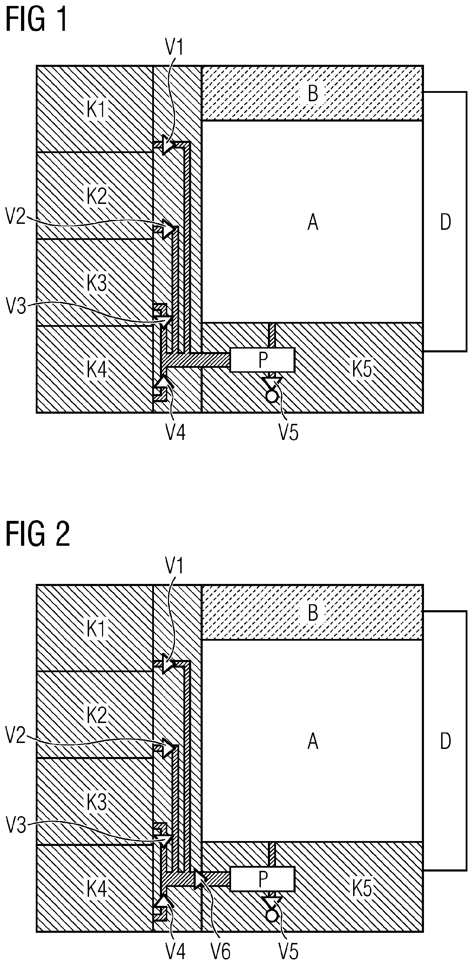

Eine beispielhafte erfindungsgemäße Vorrichtung ist schematisch in Fig. 1 gezeigt. Die Vorrichtung umfasst hierbei einen Probenbereich A mit einem Probenraum, eine Steuerbereich B mit einer Steuereinrichtung (nicht im Detail gezeigt), einen Deckel D sowie ein erstes Kompartiment K1, ein zweites Kompartiment K2, ein drittes Kompartiment K3 und ein viertes Kompartiment K4 in einem Substanzbereich sowie ein Sammelkompartiment K5 in einem Sammelbereich. Die Kompartimente sind über Kanäle in einem Fluidikbereich mit dem Probenraum im Probenbereich A verbunden, wobei der erste Kanal vom ersten Kompartiment K1 über einem gemeinsamen Kanal und eine Pumpe P zum Probenraum ein erstes Ventil V1, der zweite Kanal vom zweiten Kompartiment K2 über einem gemeinsamen Kanal und eine Pumpe P zum Probenraum ein zweites Ventil V2, der dritte Kanal vom dritten Kompartiment K3 über einem gemeinsamen Kanal und eine Pumpe P zum Probenraum ein drittes Ventil V3, und der vierte Kanal vom vierten Kompartiment K4 über einem gemeinsamen Kanal und eine Pumpe P zum Probenraum ein viertes Ventil V4 aufweist. Die Pumpe P ist hier im gemeinsamen Kanal vorgesehen, der Sammelkanal vom Sammelkompartiment K5 weist ein Sammelventil V5 auf. Nicht gezeigt sind die Verbindungen der Steuereinrichtung zu den Ventilen und der Pumpe sowie ggf. vorhandene Kanäle zum Be- und/oder Entlüften, um eine einfache Darstellung zu gewährleisten.

Eine zweite beispielhafte Ausführungsform einer erfindungsgemäßen Vorrichtung ist schematisch in Fig. 2 gezeigt, die im Wesentlichen der Vorrichtung der Fig. 1 entspricht, wobei zusätzlich zwischen dem Fluidikbereich mit den ersten bis vierten Kanälen und Teilen des gemeinsamen Kanals sowie dem Sammelbereich mit dem Sammelkompartiment K5 und der Pumpe P ein Sperrventil V6 vorgesehen ist, dass dazu ausgebildet ist, den gemeinsamen Kanal entsprechend derart zu trennen, dass der Substanzbereich und der Fluidikbereich von den anderen Bestandteilen nach Sperren des Ventils V6, ggf. zumindest mit Teilen des Steuerbereichs und insbesondere mit der mindestens einen Steuereinrichtung, als erstes Modul von den übrigen Bestandteilen als zweites Modul abgetrennt und einfach nach Wiederbefüllen der Kompartimente K1 bis K4 wiederverwendet werden kann.

Weiterhin offenbart ist die Verwendung gemäß Anspruch 8 der erfindungsgemäßen Vorrichtung zum Fixieren und/oder Einbetten einer Probe eines Patienten.

Ebenfalls offenbart ist ein Verfahren gemäß Anspruch 9 zum Fixieren und/oder Einbetten einer Probe eines Patienten unter Verwendung der erfindungsgemäßen Vorrichtung, umfassend:
- Bereitstellen der Probe des Patienten,
- Einbringen der Probe in den Probenraum der erfindungsgemäßen Vorrichtung,
- Schließen des Deckels,
- automatisches Einbringen einer mindestens einen ersten Substanz vom ersten Kompartiment in den Probenraum bis zu einer definierten ersten Menge der mindestens einen ersten Substanz durch Öffnen des mindestens einen ersten Ventils,
- automatisches Schließen des ersten Ventils nach Erreichen der definierten ersten Menge der mindestens einen ersten Substanz im Probenraum,
- Interagieren der Probe mit der mindestens einen ersten Substanz für einen definierten ersten Zeitraum,
- automatisches Austragen der mindestens einen ersten Substanz und/oder mindestens einer ersten ausgetauschten Substanz aus dem Probenraum in das Sammelkompartiment durch Öffnen des mindestens einen Sammelventils,
- automatisches Schließen des mindestens einen Sammelventils nach, bevorzugt im Wesentlichen vollständigen, Austragen der mindestens einen ersten Substanz und/oder der mindestens einen ersten ausgetauschten Substanz aus dem Probenraum,
- automatisches Einbringen einer mindestens einen zweiten Substanz vom zweiten Kompartiment in den Probenraum bis zu einer definierten zweiten Menge der mindestens einen zweiten Substanz durch Öffnen des mindestens einen zweiten Ventils,
- automatisches Schließen des zweiten Ventils nach Erreichen der definierten zweiten Menge der mindestens einen zweiten Substanz im Probenraum,
- Interagieren der Probe mit der mindestens einen zweiten Substanz für einen definierten zweiten Zeitraum,
- automatisches Austragen der mindestens einen zweiten Substanz und/oder mindestens einer zweiten ausgetauschten Substanz aus dem Probenraum in das Sammelkompartiment durch Öffnen des mindestens einen Sammelventils, und
- automatisches Schließen des mindestens einen Sammelventils nach, bevorzugt im Wesentlichen vollständigen, Austragen der mindestens einen zweiten Substanz und/oder der mindestens einen zweiten ausgetauschten Substanz aus dem Probenraum, wobei das automatische Öffnen und Schließen des mindestens einen ersten Ventils, des mindestens einen zweiten Ventils und des mindestens einen Sammelventils durch die mindestens eine Steuereinrichtung gesteuert wird, und wobei die mindestens eine erste Substanz und die mindestens eine zweite Substanz sich unterscheiden und zur Fixierung und/oder Einbettung der Probe des Patienten dienen.

Das erfindungsgemäße Verfahren findet gemäß bestimmten Ausführungsformen in der angegebenen Reihenfolge statt, wobei gemäß bestimmten Ausführungsformen sich jedoch auch einzelne Schritte zum Teil überlagern können und/oder sogar gleichzeitig ablaufen könne.

Das erfindungsgemäße Verfahren dient zum Fixieren einer Probe, zum Fixieren und weiter zumindest teilweise Einbetten der Probe, oder auch nur zum Einbetten der Probe, wobei dann beim Einbringen der Probe des Patienten bevorzugt eine bereits fixierte Probe eingebracht wird. Durch das Vorhandensein der mindestens zwei Kompartimente ist es bevorzugt, dass zumindest Teilschritte einer Einbettung einer Probe in im erfindungsgemäßen Verfahren vorgenommen werden können oder sogar eine Einbettung der Probe vorgenommen werden kann.

Das erfindungsgemäße Verfahren wird unter Verwendung der erfindungsgemäßen Vorrichtung durchgeführt, sodass entsprechende Ausführungen zum Verfahren in Verbindung mit der Vorrichtung auch bezüglich des Verfahrens angewendet werden können. Bei erfindungsgemäßen Verfahren ist das Bereitstellen der Probe des Patienten nicht besonders beschränkt, und die Probe kann auf beliebige Art, beispielsweise nach einer Biopsie, bereitgestellt werden,

Auch das Einbringen der Probe in den Probenraum ist nicht besonders beschränkt. Gemäß bestimmten Ausführungsformen wird die Probe jedoch in einer Orientierung in den Probenraum eingebracht und bevorzugt auch darin in dieser Orientierung befestigt, die der Lage der Probe im Patienten bei einer Entnahme entspricht.

Ebenso ist das Schließen des Deckels nicht besonders beschränkt, wobei hier in der erfindungsgemäßen Vorrichtung ein geeigneter Schließmechanismus vorhanden sein kann, der das Schließen des Deckels registrieren kann.

Das automatische Einbringen der mindestens einen ersten Substanz vom ersten Kompartiment in den Probenraum bis zu einer definierten ersten Menge der mindestens einen ersten Substanz durch Öffnen des mindestens einen ersten Ventils, das automatische Schließen des ersten Ventils nach Erreichen der definierten ersten Menge der mindestens einen ersten Substanz im Probenraum, das automatische Austragen der mindestens einen ersten Substanz und/oder mindestens einer ersten ausgetauschten Substanz aus dem Probenraum in das Sammelkompartiment durch Öffnen des mindestens einen Sammelventils, das automatische Schließen des mindestens einen Sammelventils nach, bevorzugt im Wesentlichen vollständigen oder vollständigen, Austragen der mindestens einen ersten Substanz und/oder der mindestens einen ersten ausgetauschten Substanz aus dem Probenraum, das automatische Einbringen der mindestens einen zweiten Substanz vom zweiten Kompartiment in den Probenraum bis zu einer definierten zweiten Menge der mindestens einen zweiten Substanz durch Öffnen des mindestens einen zweiten Ventils, das automatische Schließen des zweiten Ventils nach Erreichen der definierten zweiten Menge der mindestens einen zweiten Substanz im Probenraum, das automatische Austragen der mindestens einen zweiten Substanz und/oder mindestens einer zweiten ausgetauschten Substanz aus dem Probenraum in das Sammelkompartiment durch Öffnen des mindestens einen Sammelventils, und das automatische Schließen des mindestens einen Sammelventils nach, bevorzugt im Wesentlichen vollständigen Austragen oder vollständigen, Austragen der mindestens einen zweiten Substanz und/oder der mindestens eine zweiten ausgetauschten Substanz aus dem Probenraum sind nicht besonders beschränkt, sofern das automatische Öffnen und Schließen des mindestens einen ersten Ventils, des mindestens einen zweiten Ventils und des mindestens einen Sammelventils durch die mindestens eine Steuereinrichtung gesteuert wird. Das jeweilige Einbringen und/oder Austragen der jeweiligen Substanzen kann hierbei auch unter Verwendung der ersten Pumpe erfolgen. Ebenso sind das Interagieren der Probe mit der mindestens einen ersten Substanz für einen definierten ersten Zeitraum und das Interagieren der Probe mit der mindestens einen zweiten Substanz für einen definierten zweiten Zeitraum sowie optional das Interagieren der Probe mit mindestens einer dritten, vierten, fünften, sechsten, siebten, achten, neunten, zehnten, etc., Substanz für einen definierten zweiten, dritten, vierten, fünften, sechsten, siebten, achten, neunten, zehnten, etc., definierten Zeitraum nicht besonders beschränkt.

Entsprechend können weitere Substanzen, z.B. mindestens eine dritte, vierte, fünfte, sechste, siebte, achte, neunte, zehnte, etc. Substanz, beispielsweise bis zu vier oder fünf Substanzen, aus entsprechenden Kompartimenten, wie oben angegeben, automatisch in den Probenraum bis zu einer definierten dritten, vierten, fünften, sechsten, siebten, achten, neunten, zehnten, etc. Menge durch Öffnen mindestens eines dritten, vierten, fünften, sechsten, siebten, achten, neunten, zehnten, etc. Ventils eingebracht; das dritte, vierte, fünfte, sechste, siebte, achte, neunte, zehnte, etc. Ventil nach Erreichen der definierten dritten, vierten, fünften, sechsten, siebten, achten, neunten, zehnten, etc. Menge der jeweiligen mindestens einen Substanz im Probenraum automatisch geschlossen; die Probe mit der mindestens einen dritten, vierten, fünften, sechsten, siebten, achten, neunten, zehnten, etc. Substanz für einen definierten dritten, vierten, fünften, sechsten, siebten, achten, neunten, zehnten, etc. Zeitraum interagieren gelassen; die mindestens eine dritte, vierte, fünfte, sechste, siebte, achte, neunte, zehnte, etc. Substanz und/oder mindestens eine dritte, vierte, fünfte, sechste, siebte, achte, neunte, zehnte, etc. ausgetauschte Substanz aus dem Probenraum in das Sammelkompartiment durch Öffnen des mindestens einen Sammelventils automatisch ausgetragen; und das mindestens eine Sammelventil nach, bevorzugt im Wesentlichen vollständigen Austragen oder vollständigen, Austragen der mindestens einen dritten, vierten, fünften, sechsten, siebten, achten, neunten, zehnten, etc. Substanz und/oder der mindestens einen dritten, vierten, fünften, sechsten, siebten, achten, neunten, zehnten, etc. ausgetauschte Substanz aus dem Probenraum automatisch geschlossen werden, wobei die Reihenfolge hier der Reihenfolge bei der ersten und zweiten Substanz entspricht.

Das bevorzugt im Wesentlichen vollständigen Austragen oder vollständigen, Austragen der mindestens einen jeweiligen Substanz muss nicht vollständig erfolgen, und es ist nicht ausgeschlossen, dass ein Teil der jeweiligen Substanz verbleibt, z.B. wenn diese im nächsten Schritt noch verwendet wird, z.B. im Rahmen einer Aufkonzentrierung an Alkohol in einer Alkoholreihe, z.B. in einer Menge von bis zu 80 Vol.%, bevorzugt bis zu 50 Vol.%, z.B. bis zu 30 Vol.% oder bis zu 20 Vol.%, bezogen auf die ursprüngliche Menge der jeweiligen eingebrachten Substanz.

Die mindestens einen erste bis zehnte Substanz ist jeweils nicht besonders beschränkt, ist bevorzugt jedoch flüssig, z.B. in Form einer Flüssigkeit oder Lösung, oder kann zumindest leicht verflüssig werden, z.B. durch Erwärmen, z.B. Paraffin zum Einbetten der Probe. Die jeweiligen Substanzen unterscheiden sich jedoch, z.B. stofflich (d.h. umfassen verschiedene Substanzen) und/oder hinsichtlich einer Konzentration, z.B. bei einer Alkoholreihe, wo beispielsweise zunächst ein Wasser-Alkohol-Gemisch eingebracht werden kann, und dann sukzessive nach Abzug zumindest eines Teils des Gemisches nur Alkohol zugegeben werden kann, um den Anteil an Alkohol insgesamt zu erhöhen. Gemäß bestimmten Ausführungsformen ist es entsprechend auch möglich, zwei oder mehrere Substanzen zu mischen, indem die entsprechenden Ventile in den Kanälen zu den Kompartimenten, aus denen die Substanzen stammen, gleichzeitig zumindest teilweise gemischt werden, z.B. Wasser und Alkohol für eine Alkoholreihe. Hierbei ist es auch nicht erforderlich, die jeweilige Substanz immer vollständig aus dem Probenraum zu entfernen, sondern es kann auch noch ein Gemisch, z.B. ein Wasser-Alkohol-Gemisch verbleiben, um durch Zugabe von weiterer Substanz, z.B. Alkohol, dieses weiter zu konzentrieren für die weitere Substanz. Hierdurch kann die Anzahl an Kompartimenten und damit die Größe der Vorrichtung insgesamt weiter verringert werden. Ein solches Mischen bietet sich beispielsweise bei einem sukzessiven Austausch von Wasser der Probe in einer Alkoholreihe an.

Beim Interagieren der Probe mit den jeweiligen Substanzen kann beispielsweise eine Reaktion ablaufen, wobei dann die entsprechende Substanz nach dem Interagieren zumindest teilweise wieder abgeführt werden kann, ggf. mit einem Reaktionsprodukt, und/oder es kann ein Austausch der Substanz gegen eine Substanz in der Probe stattfinden. Ein Beispiel für den ersten Fall wäre die Denaturierung von Probenbestandteilen mit z.B. Formaldehyd, ein Beispiel für den zweiten Fall ein Austausch einer Flüssigkeit in der Probe, z.B. Wasser, mit einer entsprechenden Substanz, z.B. einem Alkohol, oder ein Austausch einer zuvor bereits ausgetauschten Substanz mit einer weiteren Substanz, z.B. der Austausch von Alkohol durch Xylol oder von Xylol durch flüssiges Paraffin für eine Einbettung.

Entsprechend können die jeweiligen ausgetauschten Substanzen auch gemäß bestimmten Ausführungsformen im Wesentlichen einer zuvor eingebrachten Substanz entsprechen oder dieser entsprechen, z.B. kann zuvor eingebrachter Alkohol aus der Probe durch Xylol ausgetrieben werden. Auch ist nicht ausgeschlossen, dass Gemische aus eingebrachter Substanz und ausgetauschter Substanz automatisch ausgetragen werden, z.B. wenn die jeweilige Substanz in einer Überschussmenge im Vergleich zum Probenvolumen eingebracht wird.

Die jeweilige definierte Menge der definierten mindestens einen Substanz und der jeweilige definierte Zeitraum zum Interagieren der jeweiligen mindestens einen Substanz können hierbei beispielsweise von der Art und Menge der Probe, der Art der jeweiligen Substanz und dem Ziel der Interaktion abhängen und können geeignet eingestellt werden und/oder automatisch bestimmt werden, beispielsweise indem man die Probengröße eingibt.

Gemäß bestimmten Ausführungsformen wird im erfindungsgemäßen Verfahren der Probenraum und/oder ein oder mehrere Kompartimente über eine zweite Pumpe und/oder ein Ventil oder mehrere Ventile zum Be- und/oder Entlüften be- und/oder entlüftet, insbesondere wenn eine jeweilige Substanz in einen entsprechenden Raum eingebracht oder ausgetragen wird.

Gemäß bestimmten Ausführungsformen wird eine jeweilige Substanz nicht direkt auf die Probe gerichtet eingebracht, um eine Beschädigung der Probe zu vermeiden. Dies kann beispielsweise durch eine entsprechende Anordnung eines entsprechenden Kanals zum Einbringen, z.B. auch des gemeinsamen Kanals, sichergestellt werden. Natürlich kann dies auch über die Regelung eines Flusses der jeweiligen Substanz sichergestellt werden.

Auch ist es nicht ausgeschlossen, dass ein Einbringen einer nachfolgenden Substanz, z.B. der mindestens einen zweiten Substanz, zusammen mit dem Austragen der Vorsubstanz, z.B. der mindestens einen ersten Substanz, vonstattengeht, beispielsweise wenn hierzu ein Durchfluss im Probenraum realisiert wird und entsprechend das Sammelventil und das entsprechende Ventil im zuführenden Kanal, z.B. dem Kanal aus dem zweiten Kompartiment, gleichzeitig geöffnet werden.

Gemäß bestimmten Ausführungsformen wird die Probe im Probenbereich beim Einbringen der Probe in den Probenraum mit einer Befestigungseinheit befestigt. Das Befestigen ist hierbei nicht besonders beschränkt und kann manuell, z.B. über Schließen einer Befestigungseinheit, und/oder selbständig, beispielsweise über eine entsprechende haftende Fläche, erfolgen.

Gemäß bestimmten Ausführungsformen erfolgt das Einbringen der mindestens einen ersten Substanz, das Austragen der mindestens einen ersten Substanz und/oder der mindestens einen ersten ausgetauschten Substanz, das Einbringen der mindestens einen zweiten Substanz und/oder das Austragen der mindestens einen zweiten Substanz und/oder der mindestens einen zweiten ausgetauschten Substanz mit Hilfe mindestens einer ersten Pumpe, insbesondere mindestens einer ersten Mikrofluidikpumpe, die insbesondere mit der mindestens einen Steuereinrichtung gesteuert wird. Auch das Einbringen und/oder Austragen der jeweiligen mindestens einen dritten bis zehnten, etc. Substanz und/oder einer mindestens einen dritten bis zehnten, etc. ausgetauschten Substanz kann mit Hilfe der ersten Pumpe entsprechend erfolgen. Das Pumpen ist hierbei nicht besonders beschränkt und kann insbesondere zur besseren Regelung des Flusses im Fluidikbereich wie auch zur besseren Regelung der eingebrachten Menge sowie einen schnelleren Ablauf beim Einbringen und/oder Austragen beitragen.

Gemäß bestimmten Ausführungsformen erfolgt zumindest ein Öffnen des mindestens einen ersten Ventils, wenn der Deckel geschlossen wird. Insbesondere wird das erste Ventil also automatisch geöffnet, wenn der Deckel geschlossen wird. Hierdurch wird ein "Altern" der Probe vermieden und eine schnelle Fixierung und/oder Einbettung gewährleistet.

Gemäß bestimmten Ausführungsformen wird das automatische Einbringen der mindestens einen ersten Substanz vom ersten Kompartiment in den Probenraum bis zu einer definierten ersten Menge und/oder das automatische Einbringen der mindestens einen zweiten Substanz vom zweiten Kompartiment in den Probenraum bis zu einer definierten zweiten Menge durch mindestens einen Sensor registriert, der mit der mindestens einen Steuereinrichtung verbunden ist, welche bei Erreichen der definierten ersten Menge das mindestens eine erste Ventil und/oder bei Erreichen der definierten zweiten Menge das mindestens eine zweite Ventil schließt. Entsprechendes gilt auch für die jeweiligen mindestens einen dritten bis zehnten, etc. Substanzen und die entsprechenden ersten bis zehnten, etc. Ventile. Hierdurch kann individuell auf Proben verschiedener Größe eingegangen werden, ohne ein Übermaß der jeweiligen Substanzen zu verbrauchen, was zu einer Verringerung der zu entsorgenden Substanzen führt, welche ggf. ja auch desinfiziert werden müssen.

Gemäß bestimmten Ausführungsformen wird nach Fixierung und/oder Einbettung der Probe und/oder nach Betätigung eines Öffnungsmechanismus der Deckel geöffnet. Insbesondere bei zeitkritischen Vorgängen kann hierdurch das Ende der Fixierung und/oder Einbettung automatisch angezeigt werden, indem sich der Deckel automatisch öffnet, oder es kann sichergestellt werden, dass die Probe erst zur Weiterverarbeitung der Umgebung ausgesetzt wird, indem ein Öffnungsmechanismus vorhanden ist. Entsprechend kann die erfindungsgemäße Vorrichtung hierzu gemäß bestimmten Ausführungsformen einen Öffnungsmechanismus aufweisen, der nicht besonders beschränkt ist.

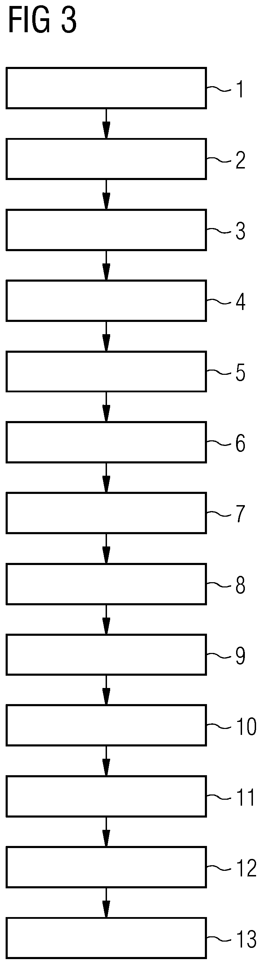

Ein beispielhaftes erfindungsgemäßes Verfahren ist in Fig. 3 gezeigt.

Zunächst findet ein Bereitstellen der Probe 1 statt, gefolgt von einem Einbringen der Probe in den Probenraum der Vorrichtung 2. Nach dem Schließen des Deckels 3 erfolgt ein automatisches Einbringen einer mindestens einen ersten Substanz in den Probenraum 4, ein automatisches Schließen des ersten Ventils 5, ein Interagieren der Probe mit der mindestens einen ersten Substanz 6 und ein automatisches Austragen der mindestens einen ersten Substanz und/oder mindestens einer ersten ausgetauschten Substanz aus dem Probenraum 7. Daraufhin folgt ein automatisches Schließen des mindestens einen Sammelventils nach im Wesentlichen vollständigen Austragen der mindestens einen ersten Substanz und/oder der mindestens einen ersten ausgetauschten Substanz aus dem Probenraum 8, ein automatisches Einbringen einer mindestens einen zweiten Substanz in den Probenraum 9, ein automatisches Schließen des zweiten Ventils 10, ein Interagieren der Probe mit der mindestens einen zweiten Substanz 11 und ein automatisches Austragen der mindestens einen zweiten Substanz und/oder mindestens einer zweiten ausgetauschten Substanz aus dem Probenraum 12, sowie ein automatisches Schließen des mindestens einen Sammelventils nach im Wesentlichen vollständigen Austragen der mindestens einen zweiten Substanz und/oder der mindestens eine zweiten ausgetauschten Substanz aus dem Probenraum 13.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Ein beispielhafte erfindungsgemäße Vorrichtung ist analog dem Schema in Fig. 1 aufgebaut

In Beispiel 1 hat die in Fig. 1 gezeigte Vorrichtung eine Größe von ca. 2 × 2 × 1 cm³ (Breite × Höhe × Tiefe). Diese unterteilt sich technisch in einen zentralen Probenbereich A, einen Steuerungsbereich B mit mindestens einer Steuereinrichtung und einen Substanzbereich, der beispielsweise auch als C bezeichnet werden kann. Die Räume für Proben, Substanzen, Kanäle in den Bereichen sind jeweils durch Wände entsprechend voneinander abgegrenzt. Die Geometrie und die Größenmaße sind als Beispiele zu verstehen, die sich u.A. nach einer Größe der aufzunehmenden Probe richten können. Ein Deckel D schließt den Probenbereich luft- und flüssigkeitsdicht ab. Die Behälterwände bestehen hier beispielsweise aus einem lichtdichten, intransparenten Kunststoffmaterial.

Der Probenbereich A hat beispielhafte Abmessungen von 1 × 1 × 1 cm³. Im Beispiel ist er relativ zentrisch platziert, die Bereiche B und C gruppieren sich um ihn. Er weist hier beispielhaft 5 zusammengeführte Kanalöffnung(en) auf, durch die aus dem Substanzbereich C Substanzen in den Probenbereich A eingebracht oder wieder aus diesem entfernt werden können. Die Öffnungen sind hier im Mikro- bis Millimeterbereich dimensioniert.

Der Steuerungsbereich B ist für den zeitlichen Betrieb der Substanzkanäle zuständig. Er weist mindestens eine Steuereinrichtung bzw. Steuerungseinheit, z.B. einen Microcontroller, und optional Sensoren wie Druck- und Füllstandsensoren auf. Die Steuereinrichtung steuert einen Fluss in den Substanzkanälen, z.B. durch Öffnungen von entsprechenden Ventile V1 bis V5 und/oder den Betrieb der Mikrofluidpumpe P.

Der Substanzbereich C enthält hier vier Kompartimente K1 bis K4, welche mindestens eine chemische Substanz enthalten, sowie ein Sammelkompartiment K5, das anfänglich "leer" sein kann und der Aufnahme bzw. Entsorgung von Flüssigkeiten dient.

Der Substratbereich C umfasst im hier gezeigten Beispiel alles außer dem Substanzbereich A und dem Steuerbereich B sowie den Sammelbereich mit dem Sammelkompartiment K5. Die Mikrofluidpumpe P wird hier auch mit dem Sammelkompartiment / Auffangbehälter K5 verbunden. Alle Zuflüsse tragen Ventile V1 bis V4, und das Sammelkompartiment weist ein Sammelventil K5 auf, wobei die Ventile V1 bis V5 von der Steuereinrichtung geöffnet bzw. geschlossen werden können. Zudem steuert die Steuereinrichtung auch die Pumpe P. Zusätzliche Sensoren und/oder Heizelemente können die Zuflüsse und/oder Viskositäten der Substanzen, z.B. Flüssigkeiten, in den Kompartimenten K1 bis K4 ggf. weiter steuern.

In der hier beispielhaft gezeigten Vorrichtung kann ein Einbetten einer, optional bereits mit z.B. Formaldehyd fixierten, Probe automatisch erfolgen, wobei die folgenden Substanzen in den Kompartimenten K1 bis K4 vorliegen:
K1: Wasser
K2: Alkohol, z.B. Ethanol und/oder Methanol
K3: Xylol
K4: Vergussmittel wie flüssiger Kunststoff oder flüssiges Paraffin oder Paraffin/Kunststoff-Gemisch

Die Kompartimente K1 bis K5 sind über entsprechende Kanäle mit dem Probenbereich A verbunden. Die Kanäle können mit Ventilen V1 bis V5 geöffnet und geschlossen werden. Die hier gezeigte Mikrofluidpumpe P ist hier optional vorgesehen, um den Probenbereich A gezielt mit Substanzen zu füllen oder um diesen zu entleeren.

In der hier gezeigten vorteilhaften Anordnung werden die Kanäle in einen gemeinsamen Kanal zusammengeführt, und die Mikropumpe P liegt im zusammengeführten Kanal K hin zum Probenbereich A. Durch Öffnung eines der Ventile V1 bis V4 kann die zugehörige Substanz über die Pumpe P in den Probenbereich A gepumpt werden bzw. durch Öffnung von Ventil V5 und umgekehrten Betrieb der Pumpe Substanzen aus dem Probenbereich in das Sammelkompartiment K5 zur Entsorgung gebracht werden. Nach einer Gewebeentnahme z.B. in der Chirurgie eines Krankenhauses wird die Probe, ggf. nach Fixierung mit Formaldehyd, in einen Probenraum des Probenbereichs A der Vorrichtung eingebracht. Sie wird auf einer Bodenplatte des Probenraums befestigt, z.B. durch eine klebrige Oberflächenschicht an der Unterseite.

Damit ist es auch möglich, die Achse senkrecht zur Bodenplatte als Referenzachse zu verwenden und somit eine Orientierungsinformation der Probe mit beizugeben. Eine Option dazu ist es, den Behälter nach Befestigung der Probe so im Raum zu halten, wie die Gewebeprobe entnommen wurde und über einen Knopf der Steuereinrichtung zu signalisieren, dass diese räumliche Orientierung der Lage im Körper möglichst exakt entspricht. Die Steuereinrichtung kann dann z.B. über ein Gyroskop die Ausrichtung der Probe im Raum bestimmen und diese digital zur weiteren Verarbeitung speichern oder an einen externen Datenempfänger übertragen.

Im Anschluss wird der Deckel D luft- und wasserdicht verschlossen. Der Behälter kann in einen gepolsterten Umschlag bzw. ein Päckchen verpackt, mit einer Identifikationsnummer versehen und in die Post zur zentralen Pathologie gegeben werden.

Die Steuereinrichtung registriert das Schließen des Deckels und beginnt ein zeitliches Ablaufprogramm, das parallel zum Posttransport geschieht. Dies kann exemplarisch so aussehen:
T0: Fülle den Probenraum Probenbereich A über eine Zeitstrecke von z.B. 10 Minuten mit einem Alkohol-Wassergemisch aus Kompartimenten K1 und K2
T0 + 60 Minuten: Entziehe dem Probenraum 20 Vol.% der Füllung in 10 Minuten durch Austragen in Kompartiment K5 und füge anschließend eine entsprechende Menge Alkohol aus Kompartiment K2 hinzu, wobei sich hier entsprechende Stufen über mehrere Stunden für eine Umsetzung einer Alkoholreihe mit steigender Konzentration anschließen, z.B. auch bis zu 100% Alkohol.
T0+ 6 Stunden: Entziehe dem Probenraum die Flüssigkeiten und erstelle eine Intermediumphase durch Zugabe von Xylol aus Kompartiment K3
T0 + 9 Stunden: Entziehe dem Probenraum das Xylol und fülle den Probenraum mit flüssigem Paraffin oder einem Paraffin/Kunststoffgemisch aus Kompartiment K4. Ideal sind niedrigviskose Substanzen, die unter Raumtemperatur aushärten.
T0 + 18 Stunden: Der Behälter kommt im zentralen Pathologielabor zur weiteren Verarbeitung an

In der zentralen Pathologie kann die Probe aus der Vorrichtung entnommen und manuell wie bisher weiterverarbeitet werden oder einer maschinellen Verarbeitung der Probe und/oder der Vorrichtung vorgenommen werden, beispielsweis auch die Probenentnahme automatisch erfolgen, z.B. indem die Probe an eine entsprechende Stelle einer weiterverarbeitenden Maschine angedockt wird.

Mit der vorliegenden Vorrichtung und dem vorliegenden Verfahren ist es möglich, eine Vorverarbeitung einer Probe, insbesondere einer histologischen Gewebeprobe, direkt nach der Entnahme vorzunehmen. Dadurch kann nach Fixierung und ggf. Einbettung im Anschluss automatisch eine Auswertung und optional digitale Befundung durchgeführt werden.

Insbesondere ergeben sich die folgenden Vorteile der vorliegenden technischen Lösung:
- Die komplette Vorbereitung einer histologischen Schnittprobe kann automatisiert werden.
- Das Verfahren kann standardisiert in einer kostengünstigen Vorrichtung stattfinden.
- Der aufwändige Laborprozess kann auf dem Postweg erfolgen und damit die Verfahrenszeit von z.B. rund 24 Stunden einsparen.
- Durch die standardisierte Vorrichtung können nachfolgende Prozessschritte wie das Schneiden der Probe auf z.B. einem Mikrotom, ein Färben und die eigentliche optische Analyse stärker industrialisiert und damit beschleunigt werden.

## Patentansprüche

1. Vorrichtung zum automatischen Fixieren und/oder Einbetten einer Probe eines Patienten, umfassend
- einen Probenbereich (A) mit einem Probenraum, bei dem der Probenraum dazu ausgebildet ist, eine Probe aufzunehmen;
- einen Deckel (D), der mit dem Probenbereich (A) verbunden ist und dazu ausgebildet ist, den Probenraum nach dem Einbringen der Probe zu verschließen;
- einen Substanzbereich, der mindestens ein erstes und ein zweites Kompartiment (K1,K2) umfasst, wobei das erste Kompartiment (K1) dazu ausgebildet ist, mindestens eine erste Substanz aufzunehmen, und das zweite Kompartiment (K2) dazu ausgebildet ist, mindestens eine zweite Substanz aufzunehmen, wobei die mindestens eine erste Substanz und die mindestens eine zweite Substanz sich unterscheiden und zur Fixierung und/oder Einbettung der Probe des Patienten dienen;
- einen Fluidikbereich, der das erste Kompartiment (K1) mit dem Probenraum und das zweite Kompartiment (K2) mit dem Probenraum derart verbindet, dass die mindestens eine erste Substanz aus dem ersten Kompartiment (K1) über einen ersten Kanal und die mindestens eine zweite Substanz aus dem zweiten Kompartiment (K2) über einen zweiten Kanal in den Probenraum geleitet werden können, wobei der erste Kanal mindestens ein erstes Ventil Z (V1) und der zweite Kanal mindestens ein zweites Ventil (V2) umfassen;
- einen Sammelbereich mit einem Sammelkompartiment (K5), bei dem das Sammelkompartiment dazu ausgebildet ist, mindestens eine erste ausgetauschte Substanz, mindestens eine zweite ausgetauschte Substanz, die mindestens eine erste Substanz und/oder die mindestens eine zweite Substanz zu sammeln, wobei das Sammelkompartiment (K5) mit dem Probenraum mit mindestens einem Sammelkanal verbunden ist, welche mindestens ein Sammelventil (V5) umfasst; und
- einen Steuerbereich mit mindestens einer Steuereinrichtung, die dazu ausgebildet ist, zumindest das mindestens eine erste Ventil (V1), das mindestens eine zweite Ventil (V2) und das mindestens eine Sammelventil (V5) zu steuern; **dadurch gekennzeichnet, dass** die Vorrichtung ein Gesamtvolumen aufweist, die maximal dem vierzigfachen Volumen des Probenraums entspricht, wobei der Probenraum ein Volumen von weniger als 200 cm³ aufweist.

2. Vorrichtung nach Anspruch 1, aufweisend mindestens ein Gyroskop, dass dazu ausgebildet ist, die Probe in der Vorrichtung derart auszurichten, dass die Probe beim Einbringen und beim Ausbringen aus der Vorrichtung dieselbe Ausrichtung aufweist, wobei die Vorrichtung im Probenbereich eine Befestigungseinheit aufweist, die dazu ausgebildet ist, die Probe im Probenraum in einer bestimmten Ausrichtung zu befestigen.

3. Vorrichtung nach Anspruch 1 oder 2, wobei der erste Kanal, der zweite Kanal und/oder der Sammelkanal zumindest teilweise in einem gemeinsamen Kanal zusammengefasst sind, bevorzugt wobei der erste Kanal, der zweite Kanal, der Sammelkanal und/oder der gemeinsame Kanal ein Kanal mit einer durchschnittlichen Öffnung von weniger als 1 cm, bevorzugt ein Mikrokanal, ist.

4. Vorrichtung nach einem der vorgehenden Ansprüche, weiter aufweisend mindestens eine erste Pumpe (P), insbesondere mindestens eine erste Mikrofluidikpumpe (P), die dazu ausgebildet ist, die mindestens eine erste Substanz aus dem ersten Kompartiment (K1) über den ersten Kanal und/oder die mindestens eine zweite Substanz aus dem zweiten Kompartiment (K2) über den zweiten Kanal in den Probenraum zu pumpen und/oder die mindestens eine erste ausgetauschte Substanz, die mindestens eine zweite ausgetauschte Substanz, die mindestens eine erste Substanz und/oder die mindestens eine zweite Substanz aus dem Probenraum über den Sammelkanal in das Sammelkompartiment (K5) zu pumpen, bevorzugt wobei die mindestens eine erste Pumpe (P) über die mindestens eine Steuereinrichtung gesteuert wird.

5. Vorrichtung nach Anspruch 4, wobei die mindestens eine erste Pumpe (P) in einem Bereich des gemeinsamen Kanals vorgesehen ist.

6. Vorrichtung nach einem der vorgehenden Ansprüche, wobei die mindestens eine Steuereinrichtung dazu ausgebildet ist, zumindest das erste Ventil (V1) zu öffnen, wenn der Deckel (D) den Probenbereich verschließt.

7. Vorrichtung nach einem der vorgehenden Ansprüche, weiter umfassend mindestens einen Sensor im Probenbereich, der mit der mindestens einen Steuereinrichtung verbunden ist und der dazu ausgebildet ist, eine Füllmenge im Probenraum mit der mindestens einen ersten Substanz und/oder mindestens einen zweiten Substanz anzuzeigen, wobei die mindestens eine Steuereinrichtung entsprechend der Füllmenge das erste Ventil (V1), das zweite Ventil (V2) und/oder das Sammelventil (V5) steuert.

8. Verwendung einer Vorrichtung nach einem der vorgehenden Ansprüche zum Fixieren und/oder Einbetten einer Probe eines Patienten.

9. Verfahren zum Fixieren und/oder Einbetten einer Probe eines Patienten unter Verwendung der Vorrichtung nach einem der Ansprüche 1 bis 7, umfassend:
- Bereitstellen der Probe des Patienten,
- Einbringen der Probe in den Probenraum der Vorrichtung nach einem der Ansprüche 1 bis 7,
- Schließen des Deckels (D),
- automatisches Einbringen einer mindestens einen ersten Substanz vom ersten Kompartiment (K1) in den Probenraum bis zu einer definierten ersten Menge der mindestens einen ersten Substanz durch Öffnen des mindestens einen ersten Ventils (V1),
- automatisches Schließen des ersten Ventils (V1) nach Erreichen der definierten ersten Menge der mindestens einen ersten Substanz im Probenraum,
- Interagieren der Probe mit der mindestens einen ersten Substanz für einen definierten ersten Zeitraum,
- automatisches Austragen der mindestens einen ersten Substanz und/oder mindestens einer ersten ausgetauschten Substanz aus dem Probenraum in das Sammelkompartiment (K5) durch Öffnen des mindestens einen Sammelventils,
- automatisches Schließen des mindestens einen Sammelventils (V5) nach, bevorzugt im Wesentlichen vollständigen, Austragen der mindestens einen ersten Substanz und/oder der mindestens einen ersten ausgetauschten Substanz aus dem Probenraum,
- automatisches Einbringen einer mindestens einen zweiten Substanz vom zweiten Kompartiment (K2) in den Probenraum bis zu einer definierten zweiten Menge der mindestens einen zweiten Substanz durch Öffnen des mindestens einen zweiten Ventils (V2),
- automatisches Schließen des zweiten Ventils (V2) nach Erreichen der definierten zweiten Menge der mindestens einen zweiten Substanz im Probenraum,
- Interagieren der Probe mit der mindestens einen zweiten Substanz für einen definierten zweiten Zeitraum,
- automatisches Austragen der mindestens einen zweiten Substanz und/oder mindestens einer zweiten ausgetauschten Substanz aus dem Probenraum in das Sammelkompartiment (K5) durch Öffnen des mindestens einen Sammelventils (V5), und
- automatisches Schließen des mindestens einen Sammelventils nach, bevorzugt im Wesentlichen vollständigen, Austragen der mindestens einen zweiten Substanz und/oder der mindestens einer zweiten ausgetauschten Substanz aus dem Probenraum, wobei das automatische Öffnen und Schließen des mindestens einen ersten Ventils (V1), des mindestens einen zweiten Ventils (V2) und des mindestens einen Sammelventils (V5) durch die mindestens eine Steuereinrichtung gesteuert wird, und wobei die mindestens eine erste Substanz und die mindestens eine zweite Substanz sich unterscheiden und zur Fixierung und/oder Einbettung der Probe des Patienten dienen.

10. Verfahren nach Anspruch 9, wobei die Probe im Probenbereich (A) beim Einbringen der Probe in den Probenraum mit einer Befestigungseinheit befestigt wird.

11. Verfahren nach Anspruch 9 oder 10, wobei das Einbringen der mindestens einen ersten Substanz, das Austragen der mindestens einen ersten Substanz und/oder der mindestens einen ersten ausgetauschten Substanz, das Einbringen der mindestens einen zweiten Substanz und/oder das Austragen der mindestens einen zweiten Substanz und/oder der mindestens einen zweiten ausgetauschten Substanz mit Hilfe mindestens einer ersten Pumpe (P), insbesondere mindestens einer ersten Mikrofluidikpumpe (P), erfolgt, die insbesondere mit der mindestens einen Steuereinrichtung gesteuert wird.

12. Verfahren nach einem der Ansprüche 9 bis 11, wobei zumindest ein Öffnen des mindestens einen ersten Ventils (V1) erfolgt, wenn der Deckel geschlossen wird.

13. Verfahren nach einem der Ansprüche 9 bis 12, wobei das automatische Einbringen der mindestens einen ersten Substanz vom ersten Kompartiment (K1) in den Probenraum bis zu einer definierten ersten Menge und/oder das automatische Einbringen der mindestens einen zweiten Substanz vom zweiten Kompartiment Z (K2) in den Probenraum bis zu einer definierten zweiten Menge durch mindestens einen Sensor registriert wird, der mit der mindestens einen Steuereinrichtung verbunden ist, welche bei Erreichen der definierten ersten Menge das mindestens eine erste Ventil (V1) und/oder bei Erreichen der definierten zweiten Menge das mindestens eine zweite Ventil (V2) schließt.

14. Verfahren nach einem der Ansprüche 9 bis 13, wobei nach Fixierung und/oder Einbettung der Probe und/oder nach Betätigung eines Öffnungsmechanismus der Deckel (D) geöffnet wird.

## Claims

1. Device for automatically fixing and/or embedding a sample in a patient, comprising
- a sample region (A) with a sample space, in which the sample space is embodied to receive a sample;
- a cover (D), which is connected to the sample region (A) and is embodied to close the sample space after the sample has been introduced;
- a substance region, which comprises at least one first and one second compartment (K1, K2), wherein the first compartment (K1) is embodied to receive at least one first substance and the second compartment (K2) is embodied to receive at least one second substance, wherein the at least one first substance and the at least one second substance differ and are used to fix and/or embed the sample of the patient;
- a fluidic region, which connects the first compartment (K1) with the sample space and the second compartment (K2) with the sample space so that the at least one first substance can be routed from the first compartment (K1) via a first channel and the at least one second substance can be routed from the second compartment (K2) via a second channel into the sample space, wherein the first channel comprises at least one first (V1) and the second channel comprises at least one second valve (V2);
- a collection region with a collection compartment (K5), in which the collection compartment is embodied to collect at least one first replaced substance, at least one second replaced substance, the at least one first substance and/or the at least one second substance, wherein the collection compartment (K5) is connected to the sample space with at least one collection channel, which comprises at least one collection valve (V5), and
- a control region with at least one control device, which is embodied to control at least the at least one first valve (V1), the at least one second valve (V2) and the at least one collection valve (V5); **characterised in that** the device has an overall volume which corresponds at most to forty times the volume of the sample space, wherein the sample space has a volume of less than 200 cm³.

2. Device according to claim 1, having at least one gyroscope that is embodied to align the sample in the device so that the sample has the same alignment when being introduced and being removed from the device, wherein the device in the sample region has a fastening unit, which is embodied to fasten the sample in the sample space in a specific alignment.

3. Device according to claim 1 or 2, wherein the first channel, the second channel and/or the collection channel are combined at least partially in a shared channel, preferably wherein the first channel, the second channel, the collection channel and/or the shared channel is a channel with an average aperture of less than 1 cm, preferably a microchannel.

4. Device according to one of the preceding claims, further having at least one first pump (P), in particular at least one first microfluidic pump (P), which is embodied to pump the at least one first substance from the first compartment (K1) via the first channel and/or the at least one second substance from the second compartment (K2) via the second channel into the sample space and/or to pump the at least one first replaced substance, the at least one second replaced substance, the at least one first substance and/or the at least one second substance from the sample space via the collection channel into the collection compartment (K5), preferably wherein the at least one first pump (P) is controlled by way of the at least one control device.

5. Device according to claim 4, wherein the at least one first pump (P) is provided in a region of the shared channel.

6. Device according to one of the preceding claims, wherein the at least one control device is embodied to open at least the first valve (V1) if the cover (D) has closed the sample region.

7. Device according to one of the preceding claims, further comprising at least one sensor in the sample region, which is connected to the at least one control device and which is embodied to indicate a fill quantity in the sample space with the at least one first substance and/or at least one second substance, wherein the at least one control device corresponding to the fill quantity controls the first valve (V1), the second valve (V2) and/or the collection valve (V5).

8. Use of a device according to one of the preceding claims for fixing and/or embedding a sample of a patient.

9. Method for fixing and/or embedding a sample of a patient using the device according to one of claims 1 to 7, comprising:
- providing the sample of the patient,
- introducing the sample into the sample space of the device according to one of claims 1 to 7,
- closing the cover (D),
- automatically introducing an at least one first substance from the first compartment (K1) into the sample space up to a defined first quantity of the at least one first substance by opening the at least one first valve (V1),
- automatically closing the first valve (V1) after the defined first quantity of the at least one first substance in the sample space has been reached,
- interacting the sample with the at least one first substance for a defined first period of time,
- automatically delivering the at least one first substance and/or at least one first replaced substance from the sample space into the collection compartment (K5) by opening the at least one collection valve,
- automatically closing the at least one collection valve (V5), after the at least one first substance and/or the at least one first replaced substance has been delivered from the sample space, preferably essentially completely,
- automatically introducing an at least one second substance from the second compartment (K2) into the sample space up to a defined second quantity of the at least one second substance by opening the at least one second valve (V2),
- automatically closing the second valve (V2) after the defined second quantity of the at least one second substance in the sample space has been reached,
- interacting the sample with the at least one second substance for a defined second period of time,
- automatically delivering the at least one second substance and/or at least one second replaced substance from the sample space into the collection compartment (K5) by opening the at least one collection valve (V5), and
- automatically closing the at least one collection valve after the at least one second substance and/or the at least one second replaced substance has been delivered from the sample space, preferably essentially completely, wherein the automatic opening and closing of the at least one first valve (V1), the at least one second valve (V2) and the at least one collection valve (V5) is controlled by the at least one control device, and wherein the at least one first substance and the at least one second substance differ and are used to fix and/or embed the sample of the patient.

10. Method according to claim 9, wherein the sample in the sample region (A) is fastened with a fastening unit when the sample is introduced into the sample space.

11. Method according to claim 9 or 10, wherein the introduction of the at least one first substance, the delivery of the at least one first substance and/or the at least one first replaced substance, the introduction of the at least one second substance and/or the delivery of the at least one second substance and/or the at least one second replaced substance is carried out with the aid of at least one first pump (P), in particular at least one first microfluidic pump (P), which is controlled in particular with the at least one control device.

12. Method according to one of claims 9 to 11, wherein at least an opening of the at least one first valve (V1) is carried out if the cover is closed.

13. Method according to one of claims 9 to 12, wherein the automatic introduction of the at least one first substance from the first compartment (K1) into the sample space up to a defined first quantity and/or the automatic introduction of the at least one second substance from the second compartment (K2) into the sample space up to a defined second quantity is registered by at least one sensor, which is connected to the at least one control device, which closes the at least one first valve (V1) if the defined first quantity is reached and/or closes the at least one second valve (V2) if the defined second quantity is reached.

14. Method according to one of claims 9 to 13, wherein after fixing and/or embedding the sample and/or actuating an opening mechanism, the cover (D) is opened.

## Revendications

1. Dispositif de fixation et/ou d'inclusion automatique d'un échantillon d'un patient, comprenant
- une partie (A) d'échantillon ayant un espace d'échantillon, dans lequel l'espace d'échantillon est constitué pour recevoir un échantillon ;
- un couvercle (D), qui est relié à la partie (A) d'échantillon et qui est constitué pour fermer l'espace d'échantillon après l'introduction de l'échantillon ;
- une partie de substance, qui comprend au moins un premier et un deuxième compartiment (K1, K2), le premier compartiment (K1) étant constitué pour recevoir au moins une première substance et le deuxième compartiment (K2) étant constitué pour recevoir au moins une deuxième substance, dans lequel la au moins une première substance et la au moins une deuxième substance sont différentes et servent à la fixation et/ou à l'inclusion de l'échantillon du patient ;
- une partie fluidique, qui met le premier compartiment (K1) en communication avec l'espace d'échantillon et le deuxième compartiment (K2) en communication avec l'espace d'échantillon, de manière à ce que la au moins une première substance puisse être envoyée du premier compartiment (K1) par l'intermédiaire d'un premier conduit et la au moins une deuxième substance du deuxième compartiment (K2) par l'intermédiaire d'un deuxième conduit dans l'espace d'échantillon, le première conduit comprenant au moins une première vanne (V1) et le deuxième conduit au moins une deuxième vanne (V2) ;
- une partie de collecte ayant un compartiment (K5) de collecte, dans lequel le compartiment de collecte est constitué pour collecter au moins une première substance échangée, au moins une deuxième substance échangée, la au moins une première substance et/ou la au moins une deuxième substance, dans lequel le compartiment (K5) de collecte communique avec l'espace d'échantillon par au moins un conduit de collecte, qui comprend au moins une vanne (V5) de collecte ; et
- une partie de commande ayant au moins un dispositif de commande, qui est constitué pour commander la au moins une première vanne (V1), la au moins une deuxième vanne (V2) et la au moins une vanne (V5) de collecte ;
**caractérisé en ce que**
le dispositif a un volume d'ensemble, qui correspond au maximum à quarante fois le volume de l'espace d'échantillon, l'espace d'échantillon ayant un volume de moins de 200 cm³.

2. Dispositif suivant la revendication 1, comportant au moins un gyroscope, qui est constitué pour orienter l'échantillon dans le dispositif, de manière à ce que l'échantillon ait, lorsqu'il entre dans le dispositif et lorsqu'il en sort, la même orientation, le dispositif ayant, dans la partie d'échantillon, une unité de fixation, qui est constituée pour fixer l'échantillon dans l'espace d'échantillon dans une orientation déterminée.

3. Dispositif suivant la revendication 1 ou 2, dans lequel le premier conduit, le deuxième conduit et/ou le conduit de collecte sont rassemblés au moins en partie en un conduit commun, dans lequel de préférence le premier conduit, le deuxième conduit, le conduit de collecte et/ou le conduit commun est un conduit ayant une ouverture en moyenne de moins de 1 cm, de préférence un microconduit.

4. Dispositif suivant l'une des revendications précédentes, comportant en outre au moins une première pompe (P), notamment au moins une première micro-pompe (P) fluidique, qui est constituée pour pomper la au moins une première substance du premier compartiment (K1) par le premier conduit et/ou la au moins une deuxième substance du deuxième compartiment (K2) par le deuxième conduit dans l'espace d'échantillon et/ou pour pomper la au moins une première substance échangée, la au moins une deuxième substance échangée, la au moins une première substance et/ou la au moins une deuxième substance de l'espace d'échantillon dans le compartiment (K5) de collecte par le conduit de collecte, dans lequel de préférence la au moins une première pompe (P) est commandée par le au moins un dispositif de commande.

5. Dispositif suivant la revendication 4, dans lequel la au moins une première pompe (P) est prévue dans une partie du conduit commun.

6. Dispositif suivant l'une des revendications précédentes, dans lequel le au moins un dispositif de commande est constitué pour ouvrir au moins la première vanne (V1), si le couvercle (D) ferme la partie d'échantillon.

7. Dispositif suivant l'une des revendications précédentes, comprenant en outre au moins un capteur dans la partie d'échantillon, qui est relié au au moins un dispositif de commande et qui est constitué pour indiquer une quantité de remplissage dans l'espace d'échantillon en la au moins une première substance et/ou en la au moins une deuxième substance, dans lequel le au moins un dispositif de commande commande, en fonction de la quantité de remplissage, la première vanne (V1), la deuxième vanne (V2) et/ou la vanne (V5) de collecte.

8. Utilisation d'un dispositif suivant l'une des revendications précédentes, pour fixer et/ou inclure un échantillon d'un patient.

9. Procédé de fixation et/ou d'inclusion d'un échantillon d'un patient utilisant le dispositif suivant l'une des revendications 1 à 7, comprenant :
- on se procure l'échantillon du patient,
- on introduit l'échantillon dans l'espace d'échantillon du dispositif suivant l'une des revendications 1 à 7,
- on ferme le couvercle (D),
- on introduit automatiquement, en ouvrant au moins une première vanne (V1), au moins une première substance du premier compartiment (K1) dans l'espace d'échantillon, jusqu'à une première quantité définie de la au moins une première substance,
- on ferme automatiquement la première vanne (V1), après avoir atteint la première quantité définie de la au moins une première substance dans l'espace d'échantillon,
- on fait interagir l'échantillon avec la au moins une première substance pendant un premier laps de temps défini,
- on fait passer automatiquement, en ouvrant la au moins une vanne de collecte, la au moins une première substance et/ou la au moins une première substance échangée de l'espace d'échantillon dans le compartiment (K5) de collecte,
- on ferme automatiquement la au moins une vanne (V5) de collecte après avoir fait sortir, de préférence sensiblement complètement, la au moins une première substance et/ou la au moins une première substance échangée de l'espace d'échantillon,
- on introduit automatiquement, en ouvrant la au moins une deuxième vanne (V2), au moins une deuxième substance du deuxième compartiment (K2) dans l'espace d'échantillon, jusqu'à une deuxième quantité définie de la au moins une deuxième substance,
- on ferme automatiquement la deuxième vanne (V2), après avoir atteint la deuxième quantité définie de la au moins une deuxième substance dans l'espace d'échantillon,
- on fait interagir l'échantillon avec la au moins une deuxième substance, pendant un deuxième laps de temps défini,
- on fait passer automatiquement, en ouvrant la au moins une vanne (V5) de collecte, la au moins une deuxième substance et/ou au moins une deuxième substance échangée de l'espace d'échantillon dans le compartiment (K5) de collecte, et
- on ferme automatiquement la au moins une vanne de collecte, de préférence, après avoir fait sortir sensiblement complètement la au moins une deuxième substance et/ou la au moins une deuxième substance échangée de l'espace d'échantillon, dans lequel l'ouverture et la fermeture automatique de la au moins une première vanne (V1), de la au moins une deuxième vanne (V2) et de la au moins une vanne (V5) de collecte sont commandées par le au moins un dispositif de commande et dans lequel la au moins une première substance et la au moins une deuxième substance sont différentes et servent à fixer et/ou à inclure l'échantillon du patient.

10. Procédé suivant la revendication 9, dans lequel on fixe, par une unité de fixation, l'échantillon dans la partie (A) d'échantillon, lors de l'introduction de l'échantillon dans l'espace d'échantillon.

11. Procédé suivant la revendication 9 ou 10, dans lequel l'introduction de la au moins une première substance, l'extraction de la au moins une première substance et/ou de la au moins une première substance échangée, l'introduction de la au moins une deuxième substance et/ou l'extraction de la au moins une deuxième substance et/ou de la au moins une deuxième substance échangée, s'effectuent à l'aide d'au moins une première pompe (P), notamment d'au moins une première micro-pompe (P) fluidique, qui est commandée notamment par le au moins un dispositif de commande.

12. Procédé suivant l'une des revendications 9 à 11, dans lequel au moins une ouverture de la au moins une première vanne (V1) a lieu si on ferme le couvercle.

13. Procédé suivant l'une des revendications 9 à 12, dans lequel on enregistre l'envoi automatique de la au moins une première substance du premier compartiment (K1) à l'espace d'échantillon, jusqu'à une première quantité définie et/ou l'envoi automatique de la au moins une deuxième substance du deuxième compartiment (K2) à l'espace d'échantillon, jusqu'à une deuxième quantité définie par au moins un capteur, qui est relié au au moins un dispositif de commande lequel, lorsque la première quantité définie est atteinte, ferme la au moins une première vanne (V1) et/ou, lorsque la deuxième quantité définie est atteinte, ferme la au moins une deuxième vanne (V2) .

14. Procédé suivant l'une des revendications 9 à 13, dans lequel, après la fixation et/ou l'inclusion de l'échantillon et/ou après l'actionnement d'un mécanisme d'ouverture, on ouvre le couvercle (D) .
